# EUROPÄISCHE PATENTANMELDUNG

(11) **EP 4 675 383 A2**
(43) Veröffentlichungstag der Anmeldung: **07.01.2026**
(21) Anmeldenummer: 25217939.5
(22) Anmeldetag: 18.10.2017
(51) Int. Cl.: G05B 23/02

(54) **VERFAHREN ZUM INDIREKTEN ABLEITEN EINER SYSTEMATISCHEN ABHÄNGIGKEIT ZWISCHEN EINER EINSTELLGRÖSSE UND EINER OPTISCHEN EIGENSCHAFT EINER FOLIENBAHN UND ZUM ANPASSEN DER QUALITÄT.**

(30) Priorität: 18.10.2016 DE 102016012476
(62) Teilanmeldung aus: 17829587.9
(71) Anmelder: Reifenhäuser GmbH & Co. KG Maschinenfabrik, 53844 Troisdorf (DE)
(72) Erfinder: LETTOWSKY, Christoph, 52074 Aachen (DE); FETT, Thomas, 53840 Troisdorf (DE); HILGERS, Mark, 53844 Troisdorf (DE); MAGER, Jens, 50968 Köln (DE); RÖSNER, Andreas, 53113 Bonn (DE); STELTER, Christian, 55218 Ingelheim (DE); VODENCAREVIC, Asmir, 90763 Fürth (DE); WALACH, Paul, 53844 Troisdorf (DE); GEUS, Hans-Georg, 53859 Niederkassel (DE); NITSCHKE, Michael, 53639 Königswinter (DE); NEUENHOFER, Martin, 51303 Rösrath (DE)
(74) Vertreter: Meissner Bolte Partnerschaft mbB

(57) **Zusammenfassung**

Dier Erfindung betrifft diverse Aspekte bei der Herstellung von Extrusionsprodukten.

Die Eigenschaften extrudierter Artikel hängen neben der Rezeptur maßgeblich von den Einstellgrößen und vor allem den daraus resultierenden Prozessgrößen ab. Die Einstellgrößen und insbesondere die Prozessgrößen stellen somit im Folgenden einen als "Fingerabdruck" bezeichneten Zustand des Extrusionsprozesses dar.

Die hier vorgeschlagenen Erfindungen berücksichtigen diese Tatsache und unterstützen den Bediener einer Produktionsanlage, Qualitätsabweichungen früher zu erkennen und systematisch einer Verschlechterung der Qualität entgegenzuwirken.

## Beschreibung

Die Erfindung betrifft ein Verfahren zum Überwachen eines Produktionsprozesses, ein Verfahren zum indirekten Ableiten einer systematischen Abhängigkeit, ein Verfahren zum Anpassen der Qualität, ein Verfahren zum Herstellen eines Extrusionsprodukts und eine Anlage zum Herstellen eines Extrusionsprodukts. Insbesondere betrifft die Erfindung ein Verfahren zum Überwachen eines Produktionsprozesses eines Extrusionsprodukts mit einer Produktionsvorrichtung, ein Verfahren zum indirekten Ableiten einer systematischen Abhängigkeit bei einem Produktionsprozess eines Extrusionsprodukts, ein Verfahren zum Anpassen der Qualität eines mit einer Produktionsvorrichtung hergestellten Extrusionsprodukts, ein Verfahren zum Anfahren eines Produktionsprozesses, ein Verfahren zum Herstellen eines Extrusionsprodukts und eine Anlage zum Herstellen eines Extrusionsprodukts.

Die Eigenschaften extrudierter Artikel hängen neben der Rezeptur maßgeblich von den Einstellgrößen und vor allem den daraus resultierenden Prozessgrößen ab.

Einer Abweichung der Eigenschaften des extrudierten Produkts geht häufig eine Änderung der Prozessgrößen voraus. Zu Produktionsbeginn stellt der Bediener einer Extrusionsanlage heute die Einstellgrößen so ein, dass das Endprodukt, also das Extrudat, als akzeptabel bewertet wird. Dieser im Folgenden als "Fingerabdruck" bezeichnete Produktionszustand kann anhand der Einstellgrößen und insbesondere der sich einstellenden Prozessgrößen charakteristisch beschrieben werden.

Zur Herstellung hochwertiger extrudierter Artikel ist es wünschenswert, frühzeitig zu erkennen, wenn sich die Eigenschaften des Extrusionsprodukts in unzulässiger Weise ändern. Eine Änderung der Eigenschaften des Extrusionsprodukts korreliert mit einer Änderung der Prozessgrößen.

Einige Steuerungen heutiger Extrusionsanlagen melden Abweichungen der Einstellgrö-ßen von einem Einstellgrößensollwert.

Die DE 10 2013 100 866 A1 beschreibt ein Verfahren für die indirekte Bestimmung einer spezifischen Rezeptur bei einem Extrusionsverfahren in einer Extrusionsvorrichtung, wobei auch der Produktionszustand bei der Bestimmung der Rezeptur Berücksichtigung findet.

Weitere Offenbarungen finden sich in der WO 2017/174232 A1 und in der WO 2017/174223 A1.

Der Erfindung liegt die Aufgabe zugrunde, dem Stand der Technik eine Verbesserung oder eine Alternative zur Verfügung zu stellen.

Nach einem ersten Aspekt der Erfindung löst die Aufgabe ein Verfahren zum Überwachen eines Produktionsprozesses eines Extrusionsprodukts mit einer Produktionsvorrichtung, wobei eine Messgröße mittels eines Sensors bestimmt wird, insbesondere eine Prozessgröße des Produktionsprozesses, und ein dabei gewonnener Messwert mit einem vorgegebenen Messgrößensollwert verglichen wird, insbesondere ein dabei gewonnener Prozesswert mit einem vorgegebenen Prozessgrößensollwert, wobei eine Einstellgröße bestimmt und ein dabei gewonnener Einstellgrößenistwert der Produktionsvorrichtung aus einer Produktion des Extrusionsprodukts mit einem vorgegebenen Einstellgrößensollwert verglichen wird, und eine Abweichung des Einstellgrößenistwertes vom Einstellgrößensollwert und/oder des Messwertes vom Messgrößensollwert jeweils gemeldet wird.

Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Ein "Produktionsprozess" oder eine "Produktion" beschreibt die Transformation, die aus natürlichen wie bereits produzierten Ausgangsstoffen unter Einsatz von Energie und einer "Produktionsvorrichtung" ein Produkt erzeugt. Insbesondere ist ein Produkt ein extrudierter Artikel, ein Extrusionsprodukt oder ein Extrudat.

Ein "extrudierter Artikel", oft auch als ein "Extrusionsprodukt" oder ein "Extrudat" bezeichnet, beschreibt ein Produkt, das aus einem thermoplastischen Kunststoff hergestellt werden. Diese können Halbzeuge aller Art sein, aber auch Endprodukte. Denkbar sind Kunststoffprofile, Folienbahnen, Tafelmaterial und alle anderen Formen thermoplastischer Kunststoffe, die aus einem Granulat extrudiert werden. Auch kann Bahnware gemeint sei.

Eine "Folienbahn" kann entweder eine einlagige Folienbahn sein, oder eine schlauchförmige Folienbahn, wobei der Schlauch aufgetrennt oder schlauchförmig belassen werden kann. Weiterhin kann auch ein zusammengelegter Schlauch als Folienbahn bezeichnet werden. Die Folienbahn kann einschichtig oder mehrschichtig sein.

Mit "Bahnware" wird eine Gattung von Produkten bezeichnet, insbesondere in Bahnen produzierte Halbzeuge aus Kunststoff. Beispiele für Bahnware sind einlagige Folienbahnen, schlauchförmige Folienbahnen, wobei der Schlauch aufgetrennt oder schlauchförmig belassen werden kann, zusammengelegte Folienschläuche und in Bahnen produzierte Flächengebilde aus Fasern begrenzter oder endloser Länge. Folienbahnen können einschichtig oder mehrschichtig sein. Beispiele für Produkte aus Bahnware sind Verpackungen von Süßwaren, Windeln, landwirtschaftliche Folien und Tragetaschen.

Ein "Sensor" oder auch "Detektor" ist ein technisches Bauteil, welches bestimmte physikalische oder chemische Eigenschaften und/oder die stoffliche Beschaffenheit seiner Umgebung qualitativ oder als "Messgröße" quantitativ erfassen kann. Diese Größen werden mittels physikalischer oder chemischer Effekte erfasst und in ein analoges oder digitales elektrisches Signal umgeformt.

Insbesondere wird hier unter einem "Sensor" auch ein virtueller Sensor verstanden. Ein "virtueller Sensor" bildet die Daten einer oder mehrerer erfasster Messgrößen mit einer Abbildungsfunktion auf eine bestimmte physikalische oder chemische Eigenschaft und/oder die stoffliche Beschaffenheit der Umgebung qualitativ oder quantitativ ab. Ein Sensor kann also sowohl ein physisch vorhandener Sensor oder ein virtueller Sensor sein, der eine Eigenschaft und/oder eine stoffliche Beschaffenheit seiner Umgebung qualitativ oder quantitativ erfasst. Mit anderen Worten bestimmt ein virtueller Sensor eine Größe, insbesondere eine Messgröße, eine Einstellgröße oder eine Prozessgröße, mittels einer mathematischen Vorschrift.

Ein "Messwert" ist der momentane Wert einer "Messgröße". Ein "Messgrößensollwert" ist der Vorgabewert für eine Messgröße. Unter einer Messgröße wird jegliche Größe verstanden, welche gemessen oder visuell vom Bediener erfasst werden kann. Insbesondere wird unter einer Messgröße eine Einstellgröße, eine Prozessgröße oder eine Größe verstanden, die eine Eigenschaft des Extrusionsprodukts beschreibt, insbesondere eine optische Eigenschaft, eine geometrische Eigenschaft und/oder eine funktionale Eigenschaft eines Extrusionsprodukts.

Ein _{"}Prozesswert" ist der momentane Wert einer "Prozessgröße". Ein "Prozessgrößensollwert" ist der Vorgabewert für eine "Prozessgröße". Beispiele für Einstellgrößen einer Extrusionsmaschine sind beispielsweise ein Extrusionsdruck, eine Schmelzetemperatur des Extrudats und eine Förderrate einer Extrusionsmaschine.

Ein "Einstellgrößensollwert" ist der Vorgabewert für ein Stellglied zum Einstellen einer "Einstellgröße". Der momentane Wert der Einstellgröße ist ein "Einstellgrößenistwert".

Beispiele für Einstellgrößen einer Extrusionsmaschine sind beispielsweise eine eingestellte Zylinderwandtemperatur, eine eingestellte Extrusionsgeschwindigkeit und eine eingestellte Drehzahl des Extruders.

Begrifflich sei erläutert, dass die "Bestimmung einer Größe", insbesondere einer Messgröße, einer Prozessgröße oder einer Einstellgröße, bedeutet, dass ein Größenistwert der Größe in Form einer Zahl ermittelt wird. Eine Größe kann dabei mit einem Sensor bestimmt werden oder mittels einer mathematischen und/oder physikalischen und/oder chemischen Vorschrift berechnet werden.

Unter einer "Abweichung" wird die Differenz aus einem Größensollwert, insbesondere einem Einstellgrößensollwert oder einem Prozessgrößensollwert, und einem Größenistwert, insbesondere einem Einstellgrößenistwert oder einem Prozessgrößenistwert, verstanden.

Beim Einrichten oder Anfahren einer Produktionsvorrichtung für ein Extrudat stellt der Bediener der Produktionsvorrichtung im Stand der Technik die Einstellgrößen so ein, dass das Extrusionsprodukt von dem Bediener und/oder von einem Labor anhand von optischen Eindrücken und/oder Messwerten als in Ordnung bewertet wird. Mit anderen Worten werden die Einstellgrößen der Produktionsvorrichtung so lange variiert, bis das Extrusionsprodukt eine hinreichende Qualität und damit hinreichende Eigenschaften aufweist.

Jeder Produktionszustand kann durch die aktuellen Einstellgrößenistwerte und die aktuellen Prozessgrößenistwerte charakterisiert werden. Die Summe aller Einstellgrößenistwerte und aller Prozessgrößenistwerte können auch als "Fingerabdruck" des Produktionsprozesses beschrieben werden.

Einer Abweichung der Eigenschaften eines Extrusionsprodukts geht häufig eine Änderung einer Prozessgröße voraus. Diese Tatsache hat die Erfindung erkannt und nutzt sie vorteilhaft.

Bei der Herstellung von Extrusionsprodukten ist es besonders wünschenswert, frühzeitig zu erkennen, wenn sich eine Eigenschaft eines Extrusionsprodukts in ungewünschter oder unzulässiger Art und Weise ändert.

Wie nun seitens der Erfinder erkannt wurde, korreliert diese Änderung einer Eigenschaft mit einer Änderung einer Prozessgröße, sodass aus den Prozessgrößen des Produktionsprozesses auf eine Eigenschaft des Extrusionsprodukts geschlossen werden kann.

Der Stand der Technik sah bislang vor, dass ein Bediener einer Produktionsvorrichtung für ein Extrusionsprodukt sich zumeist individuelle Erfahrungswerte mit der Produktionsvorrichtung erarbeitet, indem er die Werte unterschiedlicher Einstellgrößen und Prozessgrößen der Produktionsvorrichtung sowie Eigenschaften des Extrusionsprodukts manuell notiert und für sich mit individuell erarbeiteten Methoden auswertet.

Mit Hilfe dieser durch den Bediener gewonnenen individuellen Erfahrungen nimmt der Bediener die Produktionsvorrichtung im Rahmen eines Anfahrprozesses in Betrieb und betreibt sie zur Herstellung von Extrusionsprodukten.

Mit einer Produktionsvorrichtung können üblicherweise diverse unterschiedliche Extrusionsprodukte hergestellt werden, welche zudem unterschiedliche Eigenschaften aufweisen. Hinzu kommt, dass unterschiedliche Endkunden von Produktionsvorrichtungen unterschiedliche Extrusionsprodukte mit unterschiedlichen Rezepturen und gegebenenfalls auch an unterschiedlichen Standorten herstellen. Dadurch kommt es dazu, dass unterschiedliche Bediener sehr unterschiedliche und spezifische Erfahrungen entwickeln, die im Stand der Technik bislang nicht agglomeriert werden.

Im Stand der Technik sind Produktionsanlagen bekannt, welche eine Abweichung eines Einstellgrößenistwertes von einem Einstellgrößensollwert an den Bediener melden. Ein Rückschluss auf die Eigenschaften des Extrusionsprodukts erfolgt nicht durch den Bediener anhand seiner spezifischen individuellen Erfahrungen.

Eine Agglomeration der bei den individuellen Bedienern vorliegenden Erfahrungen findet über Kommunikation zwischen den Bedienern statt. Diese Kommunikation unterliegt naturgemäß räumlichen, zeitlichen und kommunikationsspezifischen Barrieren.

Erkennt ein Bediener eine Abweichung zwischen einem Einstellgrößenistwert und einem auf Basis seiner Erfahrungen festgelegten Einstellgrößensollwert, so entscheidet er im Stand der Technik, ob das gerade hergestellte Extrusionsprodukt trotz der festgestellten Abweichung als Produkt wie vorgesehen Verwendung finden kann, oder ob das Extrusionsprodukt anderweitig verwertet werden muss.

Abweichend wird hier vorgeschlagen, dass ein Istwert einer Messgröße, insbesondere einer Einstellgröße und/oder einer Prozessgröße, kontinuierlich oder in definierten zeitlichen Abständen oder in zufälligen zeitlichen Abständen bestimmt und zumindest teilweise gespeichert wird.

Die Bestimmung eines Istwertes einer Einstellgröße und/oder einer Prozessgröße kann dabei sowohl automatisiert mit Hilfe von geeigneten Sensoren als auch manuell durch den Bediener erfolgen. Im Fall einer manuellen Bestimmung eines Istwertes, kann dieser direkt oder mit einer zeitlichen Verzögerung in eine Datenverarbeitungs- und -auswerteeinheit übertragen werden.

Es wird vorgeschlagen, dass ein Istwert einer Einstellgröße und/oder einer Prozessgröße der Produktionsvorrichtung manuell und/oder automatisch mit dem zugehörigen Sollwert einer Einstellgröße und/oder einer Prozessgröße der Produktionsvorrichtung verglichen wird.

In einer besonders bevorzugten Ausführungsform wird ein Istwert einer Einstellgröße und/oder einer Prozessgröße der Produktionsvorrichtung automatisch mittels geeigneter Sensoren bestimmt und mit bekannten Sollwerten verglichen. Dabei werden Abweichungen zwischen Istwerten und Sollwerten automatisch erkannt und direkt an den Bediener der Produktionsvorrichtung und/oder die übergeordnete Anlagenüberwachung gemeldet. Ebenfalls wird vorgeschlagen, einen entsprechenden Fingerabdruck der Produktionsvorrichtung mit bekannten Vergleichsdaten anderer Fingerabdrücke dieser Produktionsvorrichtung oder anderer vergleichbarer Produktionsvorrichtungen manuell oder automatisiert zu vergleichen.

Konkret ist ebenfalls denkbar, dass bestehende Vergleichsdaten durch den neu erhobenen Fingerabdruck ergänzt werden. Dieses Verfahren ist besonders vorteilhaft, wenn der neu erhobene Fingerabdruck der Produktionsvorrichtung zu einem Extrusionsprodukt mit der gewünschten Eigenschaft des Extrusionsprodukt führt.

So ist beispielsweise auch denkbar, dass aus den bestehenden Vergleichsdaten für ein Extrusionsprodukt mit definierten Anforderungen an zumindest eine Eigenschaft des Extrusionsprodukts eine Sensitivitätsanalyse hinsichtlich des aktuellen Fingerabdruckes durchgeführt wird. Dadurch kann die Sensitivität des Fingerabdrucks des Produktionsprozesses hinsichtlich zumindest einer gewünschten Eigenschaft des Extrusionsprodukts aufgezeigt werden.

Außerdem wird vorgeschlagen, anhand der gewonnenen Sensitivität des Produktionsprozesses gegenüber dem Fingerabdruck und dem aktuellen Wert des Fingerabdrucks proaktiv in den Produktionsprozess einzugreifen. Dabei soll im Fall einer elektronischen Steuerung oder Regelung der Produktionsvorrichtung der Wert eines Einstellgrößensollwerts in der Anlagenelektronik und im Fall einer manuellen Steuerung der Produktionsvorrichtung der Wert eines Einstellgrößensollwerts durch den Bediener angepasst werden. Diese Anpassung soll so erfolgen, dass eine Abweichung zwischen einem Einstellgrößenistwert und/oder einem Prozessgrößenistwert und einem Einstellgrößensollwert und/oder einem Prozessgrößensollwert größer werden kann, bevor ein Extrusionsprodukt anderweitig verwertet werden muss.

Für eine besonders bevorzugte Ausführungsform wird vorgeschlagen, dass der Wert einer Einstellgröße und/oder einer Prozessgröße auch anhand von einem bestehenden Modell berechnet wird, wobei eine oder mehrere vorhandene und von der zu berechnenden Größe abweichende Einstellgrößen und/oder Prozessgrößen als Eingangsgrößen für das Modell verwendet werden können. So kann über ein Modell ermittelt werden, ob eine bestimmte Einstellgröße und/oder Prozessgröße im Rahmen der durch das Modell ermittelten Erwartung liegt und damit konsistent ist oder ob die eingesetzte Messtechnik und/oder Datenverarbeitung und/oder Datenauswertung zu überprüfen ist.

Ebenfalls ist denkbar, dass dem Bediener auf Basis der erhobenen Daten ein kontextsensitives Hilfesystem zur Verfügung gestellt wird, welches den Bediener der Produktionsvorrichtung auf besondere Ereignisse in den erhobenen Daten hinweist und/oder bedarfsgerechte Anweisungen gibt, wie der Normalbetrieb der Produktionsvorrichtung bei erkannten Abweichungen wiederhergestellt werden kann.

Es wird vorgeschlagen, dass ein solcher Hinweis an den Bediener kontextsensitiv erfolgt. Dies kann unter anderem bedeuten, dass dem Bediener nur eine Auswahl der zur Verfügung stehenden Informationen angezeigt werden kann und dem Bediener eine eindeutige konkrete Handlungsanweisung gegeben werden kann.

Ebenfalls ist in diesem Zusammenhang denkbar, dass dem Bediener einer Produktionsvorrichtung für das in Betrieb nehmen der Produktionsvorrichtung im Rahmen eines Anfahrvorgangs einer Produktionsvorrichtung konkrete Prozeduren durch ein kontextsensitives Hilfesystem vorgegeben werden, welche in Abhängigkeit der erfassten Daten durchgeführt werden sollen. Dabei kann die Kontextsensitivität hier so ausgestaltet sein, dass sie ein zeitliches Element enthält, welches über den Ablauf der vom Bediener durchzuführenden Schritte entscheidet und bei dieser Entscheidung die Entwicklung einer zur Verfügung stehenden Größe, insbesondere einer Einstellgröße und/oder einer Prozessgröße, mitberücksichtigt.

So ist beispielsweise denkbar, dass dem Bediener eine konkrete prozessorientierte Abfolge oder ein Schritt einer Abfolge für die Steuerung einer Produktionsvorrichtung nur dann ermöglicht wird, wenn eine bestimmte Bedingung vorliegt, die auch in Abhängigkeit von zumindest einem erfassten Wert, insbesondere in Abhängigkeit eines Istwertes einer Einstellgröße und/oder einer Prozessgröße, bewertet wird. Ein solches Verfahren lässt sich dabei nicht nur für das in Betrieb nehmen einer Produktionsvorrichtung verwenden, sondern in Form einer speziellen Ausgestaltung einer Verfahrensvariante auch für andere Abläufe, die im Zusammenhang mit dem Betrieb der Produktionsvorrichtung stehen.

Vorteilhaft kann damit erreicht werden, dass ein Bediener einer Produktionsvorrichtung in seiner Arbeit unterstützt wird, wodurch die Belastung des Bedieners reduziert wird und das Ergebnis seiner Tätigkeit verbessert wird. So werden Änderungen der Istwerte einer Einstellgröße und/oder einer Prozessgröße einer Produktionsvorrichtung frühzeitig an den Bediener gemeldet, sodass der Bediener ebenfalls frühzeitig, und gegebenenfalls von einem kontextsensitiven Hilfesystem geführt, auf Änderungen einer Eigenschaft des Extrusionsprodukts reagieren kann. Insgesamt kann somit die Produktion des Extrusionsprodukts robuster gegenüber etwaigen Störeinflüssen gemacht werden. So lässt sich ein lediglich anders als geplant verwertbares Extrusionsprodukt vermeiden, wodurch die Kosten eines Extrusionsprodukts und/oder des Produktionsprozesses gesenkt werden können.

Bevorzugt wird der Einstellgrößensollwert und/oder der Messgrößensollwert in Abhängigkeit eines Produktionsprozessverlaufsparameters festgelegt.

Begrifflich sei hierzu Folgendes erläutert:
Unter einem "Produktionsprozessverlaufsparameter" wird ein Parameter des Produktionsprozesses verstanden, welcher ähnlich oder vergleichbar mit einem zeitlichen Verlaufsparameter den aktuellen Zustand des Produktionsprozessverlaufs beschreibt. Ein "Produktionsprozessverlauf"' beschreibt die Zustandsänderung eines Produktionszustandes über die Zeit. Unter einem "Produktionszustand" wird der Zustand einer oder mehrerer Größen der Produktion, insbesondere einer oder mehrerer Messgrößen, insbesondere einer oder mehrerer Einstellgrößen und/oder einer oder mehrerer Prozessgrößen, verstanden. Beim in Betrieb nehmen einer Produktionsvorrichtung im Rahmen eines Anfahrvorgangs kann der Produktionsprozess beispielsweise eine Veränderung einer Zustandsgröße der Produktion durchlaufen, sodass sich bis zum Erreichen eines stationären Produktionsprozesses ein veränderlicher Produktionsprozessverlauf ergibt. Der Produktionsprozessverlaufsparameter beschreibt für das Beispiel des in Betrieb Nehmens einer Produktionsvorrichtung im Rahmen eines Anfahrvorgangs einer Produktionsvorrichtung den aktuellen Zustand der Produktionsvorrichtung im Produktionsprozessverlauf. Neben dem Anfahren der Produktionsvorrichtung kann es einen oder mehrere weitere Produktionsprozessverläufe geben, deren Zustand ebenfalls mit einem Produktionsprozessverlaufsparameter beschrieben werden kann. Im Fall eines quasistationären Produktionsprozesses kann der Produktionsprozessverlaufsparameter insbesondere stetig variieren.

Konkret wird hier nunmehr vorgeschlagen, einen Verlauf eines Istwerts einer Einstellgröße und/oder einer Prozessgröße in Abhängigkeit eines Produktionsprozessverlaufsparameters festzulegen. Dies kann beispielsweise dadurch erfolgen, dass der Bediener bei gewissen Ereignissen eine Funktion auslöst, welche die entsprechenden Istwerte in der gewünschten Reihenfolge speichert.

In einer besonderes bevorzugten Ausführungsform ist so konkret unter anderem denkbar, dass beim in Betrieb nehmen einer Produktionsvorrichtung im Rahmen eines Anfahrvorgangs oder außer Betrieb nehmen einer Produktionsvorrichtung im Rahmen eines Abfahrvorgangs einer Produktionsvorrichtung oder beim Wechsel des Extrusionsprodukts auf einer Produktionsvorrichtung in Abhängigkeit eines Produktionsprozessverlaufsparameters ein Istwert einer Einstellgröße und/oder einer Prozessgröße festgehalten und/oder gespeichert werden. So wird mit anderen Worten eine Spur von Fingerabdrücken durch diskrete Wegpunkte festgehalten, welcher der Bediener oder ein abweichender Bediener bei einem vergleichbaren Vorgang zu einem anderen Zeitpunkt erneut automatisiert oder manuell folgen kann.

Dabei kann eine Spur von Fingerabdrücken durch diskrete Wegpunkte gespeichert, geladen und verwaltet werden. Insbesondere wird hier konkret unter anderem ermöglicht, die Erfahrung eines besonders erfahrenen Bedieners mit besonders guten Resultaten zu kopieren und diese in Form einer Spur von Fingerabdrücken auf einen weniger erfahrenen Bediener oder einen Bediener in einer anderen Region zu übertragen, da dieser die Wegpunkte beim Anfahrvorgang oder Abfahrvorgang einer Produktionsvorrichtung oder beim Wechsel eines Extrusionsprodukts auf einer Produktionsvorrichtung jederzeit erneut reproduzieren kann.

Natürlich soll hier nicht unerwähnt bleiben, dass das Verfahren auf beliebige Vorgänge beim Betrieb einer Produktionsvorrichtung angewendet werden kann.

Auch diese hier vorgeschlagene Funktionalität kann vorteilhaft mit einem kontextsensitiven Hilfesystem für den Bediener der Produktionsvorrichtung kombiniert werden.

Es hat sich gezeigt, dass eine zeitliche Markierung der aufgezeichneten Daten sehr hilfreich sein kann.

So wird hier konkret unter anderem vorgeschlagen, dass der Bediener neben der Abhängigkeit von dem Produktionsprozessverlaufsparameter eine zeitliche Markierung in den aufgezeichneten Daten setzen kann. Diese Markierung erlaubt ihm später das schnellere Auffinden einer gewünschten Stelle in den aufgezeichneten Daten. Dadurch kann der Bediener ein spezifisch ausgewähltes Ereignis markieren und dieses so einfacher auffindbar machen. Dies erleichtert vorteilhaft den schnelleren Zugriff auf diese Daten und ermöglicht eine zielgerichtete Abstimmung, beispielsweise mit einem anderen Bediener, hinsichtlich der gemachten Erfahrungen zu diesem speziellen Ereignis/Zeitpunkt.

Denkbar sind in diesem Zusammenhang konkret unter anderem sowohl die Markierung von einem Zeitpunkt an welchem dem Bediener eine Auffälligkeit begegnet ist und/oder die Markierung eines Zeitpunkts an dem eine Eigenschaft des Extrusionsprodukts besonders gut oder besonders schlecht war.

Ebenfalls wird hier vorgeschlagen, neben einer zeitlichen Markierung in den Daten auch eine entsprechend zu dem Ereignis/Zeitpunkt synchronisierte Markierung auf dem Extrusionsprodukt anzubringen. So kann dieses oder die spezifische Stelle auf oder in dem Extrusionsprodukt auch später noch dem Ereignis zugeordnet und spezifisch untersucht werden.

Insgesamt kann so vorteilhaft erreicht werden, dass die Serviceunterstützung vereinfacht und beschleunigt wird, dass Probleme schneller behoben werden können oder Hinweise auf besonderes herausragende Ereignisse inklusive der zugehörigen Erfahrungen und Produkteigenschaften besser geteilt werden können.

Vorteilhaft kann damit erreicht werden, dass ein Bediener eine möglicherweise auch kontextsensitiv ausgestaltete Hilfestellung erfährt und ihm somit die Arbeit erleichtert wird, insbesondere beim Anfahrvorgang oder beim Abfahrvorgang einer Produktionsvorrichtung oder beim Wechsel des Extrusionsprodukts auf einer Produktionsvorrichtung. Dadurch können Abläufe beschleunigt und die Produktivität der Produktionsvorrichtung sowie eines Bedieners verbessert werden und die Produktion von Ausschüssen reduziert werden.

Ebenfalls kann so vorteilhaft erreicht werden, dass die Erfahrungswerte eines Mitarbeiters messbar, verfügbar und übertragbar gemacht werden. Dies erlaubt überdies auch, dass die kognitive Belastung eines Bedieners durch eine derartige Hilfestellung reduziert werden kann.

Weiterhin kann so vorteilhaft erreicht werden, dass mit den erhobenen Daten eine automatische Produktumstellung ermöglicht wird.

Konkret ist denkbar, den energetischen Aufwand beim Anfahrvorgang, beim Abfahrvorgang oder beim Betrieb einer Produktionsvorrichtung oder beim Wechsel des Extrusionsprodukts auf einer Produktionsvorrichtung zu bewerten und anhand des energetischen Aufwands die energieeffizienteste Betriebsstrategie für die jeweilige Betriebssituation vorzuschlagen oder durchzuführen.

Insgesamt kann hiermit also vorteilhaft erreicht werden, dass unerfahrenes Bedienpersonal eine Hilfestellung erhält, Ausschuss reduziert werden kann und/oder die Umstellung eines Extrusionsprodukts beschleunigt werden kann.

Nach einem zweiten Aspekt der Erfindung löst die Aufgabe ein Verfahren zum Überwachen eines Produktionsprozesses eines Extrusionsprodukts mit einer Produktionsvorrichtung, wobei eine Messgröße mittels eines Sensors bestimmt wird, insbesondere eine Prozessgröße des Produktionsprozesses, und ein dabei gewonnener Messwert mit einem vorgegebenen Messgrößensollwert verglichen wird, insbesondere ein dabei gewonnener Prozesswert mit einem vorgegebenen Prozessgrößensollwert, eine Einstellgröße bestimmt und ein dabei gewonnener Einstellgrößenistwert der Produktionsvorrichtung aus einer Produktion des Extrusionsprodukts mit einem vorgegebenen Einstellgrößensollwert verglichen werden kann, wobei eine Abweichung zumindest des Einstellgrößenistwertes vom Einstellgrößensollwert und/oder des Messwertes vom Messgrößensollwert gemeldet wird, insbesondere Verfahren nach einem ersten Aspekt der Erfindung, wobei der Einstellgrößensollwert und/oder der Messgrößensollwert für einen stationären oder quasistationären Produktionsprozess festgelegt wird.

Begrifflich sei hierzu Folgendes erläutert:
Unter einem "stationären" Produktionsprozess wird ein Produktionsprozess verstanden, dessen Zustandsgrößen, insbesondere die Messgrößen, die Einstellgrößen und/oder die Prozessgrößen, sich im Zeitverlauf nicht mehr ändern. Insbesondere ist der Anfahrvorgang der Produktionsvorrichtung abgeschlossen, sofern ein stationärer Produktionsprozess vorliegt.

Unter einem "quasistationären" Produktionsprozess wird ein Produktionsprozess verstanden, bei dem mindestens eine Zustandsgröße, insbesondere eine Messgröße, eine Einstellgröße oder eine Prozessgröße, im Zeitverlauf eine Schwingung des Zustandswertes um einen konstanten Mittelwert und mit einer konstanten Amplitude aufweist. Insbesondere ist der Anfahrvorgang der Produktionsvorrichtung abgeschlossen, sofern ein quasistationärer Produktionsprozess vorliegt.

Wie bereits unter dem ersten Aspekt der Erfindung erläutert sah der Stand der Technik bislang kurz gesagt vor, dass sich ein Bediener einer Produktionsvorrichtung über die Jahre einen individuellen Erfahrungsschatz erarbeitet. Dabei notiert er händisch die Werte unterschiedlicher Einstellgrößen und Prozessgrößen der Produktionsvorrichtung sowie Eigenschaften des Extrusionsprodukts und wertet diese nach seinen individuellen Bedürfnissen für sich anhand individuell erarbeiteter Verfahren manuell aus.

Anhand dieser individuellen Erfahrungen betreibt der Bediener die ihm bekannte Produktionsvorrichtung. Ein systematischer Austausch von Erfahrungswerten zwischen einer Mehrzahl von Bedienern auch von Bedienern an unterschiedlichen Standorten ist dementsprechend aufwändig und sogar nur bedingt möglich.

Es hat sich gezeigt, dass der zuvor definierte Fingerabdruck eines Produktionsprozesses bei vergleichbaren Produktionsvorrichtungen bei der Herstellung vergleichbarer Extrusionsprodukte übertragen werden kann.

Durch diese Erkenntnis wird hier nun konkret unter anderem vorgeschlagen, einen Fingerabdruck zu speichern, sobald ein stationärer oder je nach den Randbedingungen des Produktionsprozesses auch ein quasistationärer Produktionsprozess erreicht ist.

So kann der Bediener nach abgeschlossenem Anfahrvorgang der Produktionsvorrichtung, also sobald ein stationärer oder ein quasistationärer Produktionsprozess erreicht ist, und sobald der Bediener mit dem mindestens einen von ihm vorgegebenen Wert einer Einstellgrößen in der Art und Weise zufrieden ist, dass das Extrusionsprodukt bei dem vorliegenden mindestens einen Wert einer Prozessgrößen die gewünschte Eigenschaft aufweist, eine Funktion auslösen, welche den Fingerabdruck der Produktion speichert und somit festhält oder festlegt.

Dazu kann der Bediener beispielsweise einen hierzu eingerichteten analogen oder digitalen Auslöser betätigen, der innerhalb der Datenerfassungs- und -auswerteeinheit dafür sorgt, dass der aktuell vorliegende Fingerabdruck gespeichert wird.

Dieser gespeicherte Fingerabdruck kann dann zwischen den unterschiedlichen Bedienern einer Produktionsvorrichtung oder auch den Bedienern einer Gattung von Produktionseinrichtungen auch standortübergreifend ausgetauscht und von allen beteiligten Bedienern genutzt werden. Die Nutzung dieses Fingerabdrucks kann dabei beispielsweise nach einem der hier vorgeschlagenen Verfahren erfolgen.

Der Fingerabdruck des Produktionsprozesses ist also mit anderen Worten die Beschreibung der Herstellung eines definierten Produktes bzw. markiert er einen optimalen Produktionszustand. Damit kann er vorteilhafterweise die im Stand der Technik bekannte manuelle Aufschreibung ersetzen.

Neben den Werten eines Rezepts (nur direkte Einstellgrößen) kann der Fingerabdruck alle relevanten und messbaren Prozessgrößen sowie die Qualitätsparameter des Produkts (z.B. Stippenzähler, 2 Sigma) speichern, auch diejenigen Größen, welche keine direkten Soll-Werte darstellen (z.B. Massetemperatur, Luftvolumenstrom, Massedruck in der Düse).

Der Fingerabdruck eines Produktionsprozesses kann beispielsweise in einer elektronischen Navigationseinrichtung, die dem Bediener auch kontextsensitiv die Bedienung der Maschine erleichtern kann, angezeigt und verglichen werden. Dabei kann der Fingerabdruck des Produktionsprozesses auch bei Abweichungen von Prozessgrößen in der Navigation entsprechend vergleichend angezeigt und ausgewertet werden.

Außerdem wird vorgeschlagen, dass ein Bediener innerhalb einer entsprechend definierten Umgebung innerhalb der Datenerfassungs- und -auswerteeinheit die Daten eines Fingerabdrucks jederzeit durch manuellen Eingriff variieren oder nachtragen kann. Somit lassen sich Wegpunkte innerhalb einer Sequenz von Fingerabdrücken oder auch ein einzelner Fingerabdruck nachträglich einfügen oder im Sinne einer Verbesserung editieren oder auch löschen.

Somit beinhaltet der zweite Aspekt der Erfindung eine konsequente Weiterentwicklung des ersten Aspekts der Erfindung.

Vorteilhaft kann damit erreicht werden, dass eine beliebige Anzahl von Fingerabdrücken der Produktion während des Betriebs einer Produktionsvorrichtung gespeichert werden kann.

Dabei können die Fingerabdrücke des Produktionsprozesses vorteilhaft zu Sequenzen von Fingerabdrücken (Karten) zusammengefasst werden und für die schrittweise Annäherung an ein Produkt abgerufen oder abgefahren werden.

Für spezifische Betriebsarten können aufgezeichnete Sequenzen von Fingerabdrücken vorteilhaft zu Karten zusammengefasst werden, wodurch beispielsweise ein Fingerabdruck auf einen manuellen Tastendruck hin, oder in einer automatischen Abfolge einer Sequenz von Fingerabdrücken für einzelne Betriebsarten, genutzt und abgefahren werden kann.

Darüber hinaus wird hier unter anderem vorgeschlagen, dass zu jedem Produktionsprozess eines Extrusionsprodukts eine Dokumentation von durchlaufenen Zuständen der zur Verfügung stehenden Größen erstellt wird und diese gemeinsam mit dem Extrusionsprodukt an den Kunden ausgeliefert wird.

Insgesamt kann damit vorteilhaft erreicht werden, dass die Qualitätssicherung eines Extrusionsprodukts deutlich weiterentwickelt wird. Dies geschieht auch dadurch, dass es zu jedem Produktionsvorgang und damit zu jeder Charge oder jedem Wickel eines Zwischenprodukts oder Endprodukts eine Dokumentation des zeitlichen Verlaufs mindestens einer Einstellgröße und/oder mindestens einer Prozessgröße des Produktionsprozesses gibt. Diese können darüber hinaus im Rahmen einer Produktzertifizierung genutzt werden, wodurch ein weiterer integrativer Kundennutzen und gleichzeitig eine Wertsteigerung des Extrusionsprodukts durch Qualitätskontrolle und zertifizierbares Qualitätsversprechen geschaffen werden kann.

Bevorzugt werden der Einstellgrößensollwert und/oder ein abweichender Messgrößensollwert in Form von Bereichen vorgegeben, insbesondere in Form eines Normalbereichs, eines Warnbereichs und eines Alarmbereichs, wobei bevorzugt der Warnbereich größer ist als der Normalbereich und/oder wobei bevorzugt der Alarmbereich größer ist als der Warnbereich.

Begrifflich sei hierzu Folgendes erläutert:
Unter einem "Bereich" ist ein Wertebereich zu verstehen, in dem ein Einstellgrößensollwert, ein Messgrößensollwert, ein Prozessgrößensollwert oder ein Eigenschaftssollwert mit einem kleinsten und einem größten dem Bereich noch zugehörigen Wert vorgegeben werden können. Ein "Bereich" kann im Sonderfall auch nur einen Wert für eine der aufgezählten Messgrößen enthalten. In diesem Fall liegt die Messgröße nur innerhalb dieses Bereiches, wenn sie genau diesen Wert aufweist. Der Bereich kann durch unterschiedliche Zahlenbereiche von Zahlen definiert sein, insbesondere beispielsweise durch natürliche Zahlen, ganze Zahlen, rationale Zahlen, reelle Zahlen oder komplexe Zahlen.

Insbesondere versteht man unter einem "Normalbereich" einen Bereich in dem die dem Bereich zugehörige Messgröße einen normalen Wert aufweist, unter einem "Warnbereich" einen Bereich in dem die dem Bereich zugehörige Messgröße einen Wert aufweist, der zu einer Warnung an den Bediener und/oder die Anlagensteuerung führt, wobei die Anlagensteuerung die Warnung an den Bediener melden kann, und unter einem "Alarmbereich" einen Bereich in dem die dem Bereich zugehörige Messgröße einen Wert aufweist, der zu einem Alarm an den Bediener und/oder die Anlagensteuerung führt, wobei die Anlagensteuerung den Alarm an den Bediener meldet.

Der "Warnbereich" ist dabei so zu verstehen, dass der kleinste Wert des Warnbereichs kleiner oder gleich dem kleinsten Wert des für diese Messgröße festgelegten Normalbereichs ist und dass der größte Wert des Warnbereichs größer oder gleich dem kleinsten Wert des für diese Messgröße festgelegten Normalbereichs ist. Damit umfasst der Warnbereich bevorzugt einen größeren Zahlenbereich als der Normalbereich. Die Warnung soll jedoch nur ergehen, wenn der Wert einer Messgröße innerhalb des Warnbereichs und außerhalb des Normalbereichs liegt.

Der "Alarmbereich" ist hingegen so zu verstehen, dass der kleinste Wert des Alarmbereichs kleiner oder gleich dem kleinsten Wert des für diese Messgröße festgelegten Warnbereichs ist und dass der größte Wert des Alarmbereichs größer oder gleich dem kleinsten Wert des für diese Messgröße festgelegten Warnbereichs ist. Damit umfasst der Alarmbereich bevorzugt einen größeren Zahlenbereich als der Warnbereich. Der Warnung soll ausgelöst werden, wenn der Wert einer Messgröße innerhalb des Alarmbereichs und außerhalb des Warnbereichs liegt.

Die Formulierung "Einstellgrößensollwert und/oder ein abweichender Messgrößensollwert" ist so zu verstehen, dass mindestens eine Einstellgröße oder eine Messgröße von der Formulierung betroffen ist, wobei jedoch auch andere Messgrößen betroffen sein können. Insbesondere kann der Einstellgrößensollwert auch ein Messgrößensollwert sein, sofern die betreffende Einstellgröße auch eine Messgröße ist.

Konkret wird vorgeschlagen, dass jeglicher Wert einer Messgröße einen Alarm auslöst, sofern dieser außerhalb des zugehörigen Warnbereichs liegt. Insbesondere kann der Wert der Messgröße also auch außerhalb des zugehörigen Alarmbereichs liegen, damit ein Alarm ausgelöst wird.

So wird hier vorgeschlagen, dass von dem Hersteller der Produktionsvorrichtung und/oder dem Bediener der Produktionsvorrichtung für jede Messgröße mindestens ein Bereich definiert werden kann. Insbesondere können für jede Messgröße ein Normalbereich, ein Warnbereich und/oder ein Alarmbereich definiert werden.

Wird nur ein Normalbereich für eine Messgröße festgelegt, so wird ein Alarm ausgelöst, sofern der Wert der zugehörigen Messgröße außerhalb des Normalbereichs liegt.

Wird keiner der Bereiche für eine Messgröße festgelegt, so wird hier konkret vorgeschlagen, dass der Hersteller und/oder der Bediener eine Produktionsvorrichtung entscheidet, ob es sich um eine unkritische Messgröße handelt, deren Werte nie zu einem Alarm führen sollen, oder ob bis zur Festlegung mindestens eines Bereiches für diese Messgröße ein stetiger Alarm beim Betrieb der Produktionsvorrichtung bestehen bleibt.

Ein Normalbereich wird dabei so festgelegt, dass eine Messgröße, die einen dem Normalbereich zugehörigen Wert aufweist, im Rahmen der Erwartungen des Bedieners und/oder des Herstellers der Produktionsvorrichtung liegt. Mit anderen Worten soll der Normalbereich für eine Messgröße so festgelegt werden, dass ein Wert der Messgröße im Normalbereich als sicheres Indiz dafür gewertet werden kann, dass ein sicherer Betrieb der Produktionsvorrichtung und/oder die Erreichung mindestens einer gewünschten Eigenschaft des Extrusionsprodukts sichergestellt werden kann.

Der Warnbereich soll so durch den Hersteller und/oder den Bediener der Produktionsvorrichtung festgelegt werden, dass eine Messgröße, welche einen Wert außerhalb des Normalbereichs und innerhalb des Warnbereichs aufweist und damit eine Warnung auslöst, den Bediener der Produktionsvorrichtung zu einer gesteigerten Aufmerksamkeit zumindest mit Bezug auf die konkrete Warnung veranlasst. Eine Warnung soll als konkretes Anzeichen dafür verstanden werden, dass eine Messgröße einen Wert aufweist, welcher außerhalb der Erwartungen des Bedieners und/oder des Herstellers der Produktionsvorrichtung liegt. Dabei ist der Wert jedoch noch nicht so kritisch für die Produktionsvorrichtung oder mindestens eine Eigenschaft des Extrusionsprodukts, dass ein Alarm ausgelöst werden muss, welcher im Regelfall die Notwendigkeit eines zeitnahen Eingreifens in den Produktionsprozess anzeigt.

Der Alarmbereich soll vom Hersteller und/oder vom Bediener der Produktionsvorrichtung so festgelegt werden, dass ein Wert, der außerhalb des zugehörigen Warnbereichs liegt, durch ein zeitnahes Handeln des Bedieners wieder in den Normalbereich zurücckehren kann. Dieses Handeln des Bedieners soll beispielsweise einerseits einer drohenden Beschädigung der Produktionsvorrichtung entgegenwirken oder beispielsweise andererseits verhindern, dass ein hergestelltes Extrusionsprodukt nur noch abweichend von der bisherigen Planung verwertet werden kann.

So ist beispielsweise denkbar, dass eine Veränderung einer Eigenschaft des Extrusionsprodukts, die nahe an die Grenzen der garantierten Eigenschaft des Produktes stößt und mit einer gewissen Wahrscheinlichkeit zu erwarten ist, dass die Eigenschaft diese Grenze überschreitet, einen Alarm auslösen soll. Damit dies entsprechend umgesetzt werden kann und der Bediener frühzeitig genug einen Alarm erhält, der ihn beispielsweise zum frühzeitigen Handeln oder zu Gegenmaßnahmen oder zum Einleiten eines Abfahrvorganges auffordert, soll der Alarmbereich korrespondierend mit dem Normalbereich und/oder dem Warnbereich der entsprechenden Messgröße derart gewählt werden, dass dem Bediener eine für seine Reaktion ausreichende Reaktionszeit eingeräumt wird, damit bestenfalls während dem fortlaufenden Betrieb der Produktionsvorrichtung eine Rückkehr des Wertes der Messgröße in den Normalbereich ermöglicht bleibt.

Konkret wird vorgeschlagen, dass dem Bediener geeignete Maßnahmen als Reaktion auf einen Alarm kontextsensitiv vorgeschlagen werden.

Vorteilhaft kann damit erreicht werden, dass der Bediener beim Betrieb einer Produktionsvorrichtung derart unterstützt wird, dass er einerseits entlastet wird und andererseits die Qualität hergestellter Erzeugnisse verbessert werden kann. So kann vorteilhaft erreicht werden, dass dem Bediener eindeutig vermittelt wird, ob alle Messgrößen einer Produktionsvorrichtung den Erwartungen des Bedieners und/oder Herstellers der Produktionsvorrichtung entsprechen. Vorteilhaft kann diese Mitteilung an einem geeigneten Ort gebündelt und übersichtlich erfolgen, wobei eine kontextsensitive Bedienerführung der Produktionsvorrichtung alle notwendigerweise vom Bediener zu beachtenden Informationen übersichtlich und zusammengefasst bereitstellt.

Weiterhin kann unter anderem vorteilhaft erreicht werden, dass der Bediener einer Anlage frühzeitig gewarnt wird, sobald eine Messgröße den zu erwartenden Bereich verlässt. Der Bediener kann so gewarnt werden und seine Aufmerksamkeit gezielt auf die entsprechende Messgröße richten.

Im Fall eines Alarms kann vorteilhaft erreicht werden, dass der Bediener einen kritischen Zustand der Produktionsvorrichtung wahrnimmt und ihm in einer besonders bevorzugten Ausführungsform kontextsensitiv Handlungsaufforderungen oder Handlungsempfehlungen gegeben werden, um noch rechtzeitig beispielsweise einer Beschädigung einer Produktionsvorrichtung entgegenwirken zu können oder beispielsweise ein Überschreiten des zulässigen Bereichs einer geforderten Produkteigenschaft gewährleisten zu können, damit das Extrusionsprodukt weiterhin für seine designierte Verwendung genutzt werden kann.

Dadurch kann insgesamt vorteilhaft erreicht werden, dass die Qualität eines Extrusionsprodukt garantiert und dokumentierbar gewährleistet werden kann. Außerdem kann erreicht werden, dass die Kosten des Produktionsprozesses gesenkt werden können, da die Verfügbarkeit der Produktionsvorrichtung durch entsprechende Warnung und entsprechenden Alarm vor kritischen Zuständen gesteigert werden kann. Darüber hinaus können die Herstellkosten des Extrusionsprodukts reduziert werden, da durch das vorgeschlagene Verfahren vorteilhaft eine geringere Menge an nicht wie ursprünglich geplant einsetzbarem Extrusionsprodukt hergestellt wird.

Optional korrespondiert die Meldung der Abweichung zumindest des Einstellgrößenistwertes vom Einstellgrößensollwert und/oder des Messwertes vom Messgrößensollwert mit den Bereichen des Einstellgrößensollwertes und/oder des Messgrößensollwertes, wobei ein Normalzustand gemeldet wird, wenn der Einstellgrößenistwert und/oder der Messgrößenistwert im Normalbereich liegen, wobei ein Warnzustand gemeldet wird, wenn der Einstellgrößenistwert und/oder der Messgrößenistwert im Warnbereich und außerhalb des Normalbereiches liegen, wobei ein Alarmzustand gemeldet wird, wenn der Einstellgrößenistwert und/oder der Messgrößenistwert im Alarmbereich und außerhalb des Warnbereiches liegen.

Begrifflich sei hierzu Folgendes erläutert:
Unter einem "Normalzustand" wird ein Zustand verstanden, bei dem eine Größe, insbesondere eine Messgröße, eine Einstellgröße oder eine Prozessgröße, einen Wert aufweist, der innerhalb des zugehörigen Normalbereiches liegt.

Unter einem "Warnzustand" wird ein Zustand verstanden, bei dem eine Größe, insbesondere eine Messgröße, eine Einstellgröße oder eine Prozessgröße, einen Wert aufweist, der innerhalb des zugehörigen Warnbereiches und außerhalb des zugehörigen Normalbereiches liegt. Wird ein Warnzustand erkannt, erfolgt eine Warnung.

Unter einem "Alarmzustand" wird ein Zustand verstanden, bei dem eine Größe, insbesondere eine Messgröße, eine Einstellgröße oder eine Prozessgröße, einen Wert aufweist, der innerhalb des zugehörigen Alarmbereiches und außerhalb des zugehörigen Warnbereiches liegt. Wird ein Alarmzustand erkannt, erfolgt eine Warnung, die auf eine drohende Gefahr aufmerksam macht oder zu erhöhter Wachsamkeit aufruft.

So wird hier vorgeschlagen, dass dem Bediener ein Normalzustand gemeldet wird, wenn die Werte aller Messgrößen der Produktionsvorrichtung in den zugehörigen Normalbereichen liegen.

Ebenfalls wird vorgeschlagen, dass dem Bediener einer Produktionsvorrichtung ein Warnzustand gemeldet wird, wenn mindestens eine Messgröße einen Wert aufweist, der innerhalb des Warnbereichs aber außerhalb des Normalbereichs liegt, sodass der Bediener seine Aufmerksamkeit verstärkt auf die entsprechende Warnung lenken und gegebenenfalls geeignete Maßnahmen zur Rückkehr des Wertes der Messgröße in den Normalbereich durchführen kann.

Korrespondierend dazu wird vorgeschlagen, dass dem Bediener ein Alarmzustand gemeldet wird, wenn mindestens eine Messgröße einen Wert aufweist, der innerhalb des Alarmbereichs aber außerhalb des Warnbereichs liegt, sodass der Bediener entsprechend frühzeitig geeignete Maßnahmen zur Rückkehr des Wertes der Messgröße in den Normalbereich durchführen kann.

Meldungen können ebenfalls oder alternativ an eine übergeordnete Anlagensteuerung oder einer Person gemeldet werden, die neben der Bedienung der Produktionsvorrichtung noch weitere abweichende Aufgaben wahrnehmen soll.

Vorteilhaft kann damit erreicht werden, dass der Bediener einer Produktionsvorrichtung einen zusammengefassten Überblick erhält, ob der Produktionsprozess im Rahmen der erwarteten Parameter abläuft und mit anderen Worten alles in Ordnung ist und keine reaktiven Maßnahmen von ihm gefordert sind, sodass er entlastet wird oder seine Aufmerksamkeit entsprechend auf andere Tätigkeiten fokussieren kann.

Weiterhin kann vorteilhaft erreicht werden, dass die Aufmerksamkeit eines Bedieners im Fall der Meldung eines Warnzustands oder gar eines Alarmzustands zeitnah und unmittelbar auf die Produktionsvorrichtung und den Produktionsprozess gelenkt wird, sodass er geeignete Maßnahmen schnell und effizient ergreifen kann.

Bevorzugt werden der Einstellgrößensollwert und/oder ein abweichender Messgrößensollwert von einem Bediener der Maschine während dem Produktionsprozess vorgegeben.

Begrifflich sei hierzu Folgendes erläutert:
Unter einem "Bediener" wird die Person verstanden, welche für die Produktionsvorrichtung zuständig ist, diese überwacht und gegebenenfalls auch Einstellungen an der Produktionsvorrichtung vornimmt.

Hier wird also unter anderem vorgeschlagen, dass der Bediener einer Produktionsvorrichtung den Sollwert für eine Einstellgröße oder eine abweichende Messgröße manuell sowie während dem Produktionsprozess vorgeben kann.

Dabei ist unter anderem auch möglich, dass der Bediener der Produktionsvorrichtung den Sollwert für eine Prozessgröße vorgibt, da diese ebenfalls zu den Messgrößen gehört. Ein Beispiel für die Vorgabe einer Prozessgröße, die dabei nicht direkt zu einer Einstellgröße zählt ist etwa die Temperatur eines Extrusionszylinders, die etwa durch eine Temperierung erreicht wird. Sofern die Temperierung keine Temperaturregelung aufweist, wird die Temperatur des Extrusionszylinders vom Bediener nicht direkt als Einstellgröße verstanden und fällt aus diesem Grund unter die möglichen Messgrößen einer Produktionsvorrichtung.

Insbesondere wird vorgeschlagen, dass der Bediener auf den Fingerabdruck des Produktionsvorrichtung Einfluss nehmen kann.

Vorteilhaft kann damit erreicht werden, dass der Bediener den Produktionsprozess durch seine manuelle Einstellung eines Einstellgrößensollwerts und/oder eines abweichenden Messgrößensollwerts steuern kann. Damit kann der Bediener auf die Parameter des Produktionsprozesses eingreifen und diese entsprechend seiner Vorgaben ändern.

Optional werden der Einstellgrößensollwert und/oder ein abweichender Messgrößensollwert von einer Datenverarbeitungs- und -auswerteeinheit vorgegeben.

Begrifflich sei hierzu Folgendes erläutert:
Eine "Datenverarbeitungs- und -auswerteeinheit" ist eine elektronische Einheit, die organisiert mit Datenmengen umgeht und dabei das Ziel verfolgt, Informationen über diese Datenmengen zu gewinnen oder diese Datenmengen zu verändern. Dabei werden die Daten in Datensätzen erfasst, nach einem vorgegebenen Verfahren durch Mensch oder Maschine verarbeitet und als Ergebnis ausgegeben.

So ist konkret denkbar, dass der Fingerabdruck des Produktionsprozesses von einer Datenverarbeitungs- und -auswerteeinheit vorgegeben werden kann. Diese Vorgabe kann nach einem von der Datenverarbeitungs- und -auswerteeinheit ausgehenden Vorschlag zunächst von dem Bediener autorisiert werden müssen oder direkt autonom durch die Datenverarbeitungs- und -auswerteeinheit erfolgen.

Denkbar ist hier unter anderem, dass die Datenverarbeitungs- und -auswerteeinheit auf Basis der eingehenden Messwerte und unter Nutzung von einem Algorithmus zur Optimierung eines Einstellgrößensollwerts und/oder eines abweichenden Messgrößensollwerts eine Anpassung eines Einstellgrößensollwerts und/oder eines abweichenden Messgrößensollwerts vorschlägt. Wird dieser Vorschlag von dem Bediener autorisiert, kann die Datenverarbeitungs- und -auswerteeinheit ähnlich einer elektronischen Steuerung den abweichenden Sollwert für eine Einstellgröße und/oder eine abweichende Messgröße vorgeben.

Denkbar ist ein solches Vorgehen auch als Reaktion auf ein Warnsignal oder ein Alarmsignal, wobei die Änderung des Sollwerts für eine Einstellgröße und/oder eine abweichende Messgröße dann die Zielsetzung verfolgt den Produktionsprozess wieder in einen Normalzustand zurückzuführen.

Eine von der Datenverarbeitungs- und -auswerteeinheit vorgeschlagene Änderung kann auf Wunsch des Bedieners hin auch direkt autonom, also ohne Freigabe durch den Bediener, vorgenommen werden.

Der Vorschlag der Datenverarbeitungs- und -auswerteeinheit für eine Anpassung eines Sollwerts für eine Einstellgröße und/oder eine abweichende Messgröße kann insbesondere kontextsensitiv erfolgen.

Vorteilhaft kann damit erreicht werden, dass die Datenverarbeitungs- und -auswerteeinheit den Fingerabdruck eines Produktionsprozesses eines Extrusionsprozesses beeinflussen kann. Dabei kann die Datenverarbeitungs- und -auswerteeinheit auf Veränderungen eines Wertes einer Messgröße reagieren oder den Produktionsprozess beim Auftreten eines Warn- oder Alarmzustandes wieder in einen Normalzustand zurückführen.

Insbesondere bei der Wahl eines autonomen Betriebszustands, also einer autonomen Anpassung eines Einstellgrößensollwerts und/oder eines abweichenden Messgrößensollwerts kann vorteilhaft erreicht werden, dass die Herstellkosten eines Extrusionsprodukts bei gleichzeitiger Steigerung der Qualität des Extrusionsprodukts gesenkt werden können.

Bevorzugt werden der Einstellgrößensollwert und/oder ein abweichender Messgrößensollwert anhand der Rezeptur des Extrusionsprodukts gewählt.

Begrifflich sei hierzu Folgendes erläutert:
Unter einer "Rezeptur" eines Extrusionsprodukts wird die inhaltliche Zusammensetzung des Extrusionsprodukts aus den benötigten Ausgangsstoffen verstanden.

So wird hier unter anderem vorgeschlagen, dass der Bediener der Produktionsvorrichtung und/oder die Datenverarbeitungs- und -auswerteeinheit einen Fingerabdruck anhand der spezifischen Rezeptur des Extrusionsprodukts auswählt. So kann die Produktionsvorrichtung und der Produktionsprozess anhand des Fingerabdrucks auf die spezifischen Anforderungen des Extrusionsprodukts angepasst werden, welche ebenfalls von der Rezeptur abhängen.

Einige Extrusionsprodukte können mit unterschiedlichen Rezepturen hergestellt werden. Ebenfalls ist es möglich, dass die eingesetzten Rohstoffe geringfügige Schwankungen in ihrer Zusammensetzung aufweisen, wodurch auch die Rezeptur des Extrusionsprodukts beeinflusst wird. So wird hier außerdem konkret unter anderem vorgeschlagen, dass der Fingerabdruck des Produktionsprozesses anhand der spezifischen Rezeptur angepasst wird.

Vorteilhaft kann damit erreicht werden, dass der Produktionsprozess und die Produktionsvorrichtung mithilfe eines anhand der Rezeptur ausgewählten Fingerabdrucks optimal auf die Rezeptur eingestellt werden, wodurch die Qualität des Extrusionsprodukts auch bei abweichenden Rezepturen bestmöglich gewährleistet und der Ausschuss reduziert werden kann.

Es sei ausdrücklich darauf hingewiesen, dass der Gegenstand des zweiten Aspekts mit dem Gegenstand des vorstehenden Aspekts der Erfindung vorteilhaft kombinierbar ist, und zwar sowohl einzeln oder in beliebiger Kombination kumulativ.

Nach einem dritten Aspekt der Erfindung löst die Aufgabe ein Verfahren zum indirekten Ableiten einer systematischen Abhängigkeit bei einem Produktionsprozess eines Extrusionsprodukts zwischen einer Messgröße, insbesondere Prozessgröße, sowie einer Einstellgröße des Extrusionsprozesses und einer Eigenschaft des Extrusionsprodukts, wobei eine Ausprägung einer Eigenschaft des Extrusionsprodukts als ein erster Parameter des Verfahrens bestimmt wird, eine Messgröße, insbesondere die Prozessgröße des Produktionsprozesses, als ein zweiter Parameter des Verfahrens mittels eines Sensors bestimmt wird, ein dritter Parameter des Verfahrens, insbesondere ein Parameter der Produktionsvorrichtung aus der Produktion des Extrusionsprodukts, insbesondere die Einstellgröße des Produktionsprozesses, bestimmt wird, ein Datenerfassungssystem die ermittelten Parameter bei Bedarf digitalisiert und aufzeichnet, die bestimmten Parameter auf einander Bezug nehmend in einer Datenbank geordnet gespeichert werden, und aus den in der Datenbank gespeicherten Daten systematisch die spezifische Abhängigkeit zwischen den Parametern abgeleitet wird, und zwar mittels einer elektronischen Datenverarbeitungs- und -auswerteeinheit, welche mittels eines Algorithmus auf die Parameter zugreift und daraus die systematische Abhängigkeit ermittelt, wobei das Ableiten mindestens zwei, insbesondere mindestens 100, Datensätze von Parametern umfasst.

Begrifflich sei hierzu Folgendes erläutert:
Eine "Abhängigkeit", insbesondere eine "systematische Abhängigkeit", beschreibt das Verhältnis der Abhängigkeit einer Sache von einer anderen. Es kann durch Variation einer Sache eine kausale Variation der anderen Sache erreicht werden. Eine im mathematischen Sinne funktionale Abhängigkeit ist in diesem Kontext nicht erforderlich, aber möglich.

Die "Qualität" des Extrusionsprodukts umfasst alle objektiv und subjektiv wahrnehmbaren "Eigenschaften" des Extrusionsprodukts. In diesem Zusammenhang wird insbesondere zwischen optischen, geometrischen und funktionalen Eigenschaften differenziert. Konkrete Eigenschaften von Extrusionsprodukten sind insbesondere die mechanischen Eigenschaften, die optischen Eigenschaften und die haptischen Eigenschaften. Die Ausprägung einer Eigenschaft wird zahlenmäßig in einem "Eigenschaftswert" erfasst.

Eine "optische Eigenschaft" ist gleichbedeutend mit einer "optisch erfassbaren Eigenschaft", sie ist also eine Eigenschaft, die mit Hilfe eines optischen Verfahrens wahrgenommen und bewertet werden kann. Beispiele optisch quantifizierbarer Eigenschaften von Folienbahnen sind der Glanz, die Trübung, die Transparenz oder die Stippen in des Extrusionsprodukts. Im Besonderen sei hier darauf verwiesen, dass optisch erfassbare Eigenschaften auch Teilmengen geometrischer oder funktionaler Eigenschaften beinhalten. Als Beispiel einer geometrischen, optisch erfassbaren Eigenschaft sei beispielsweise das Dickenprofil des Extrusionsprodukts genannt.

Eine "geometrische Eigenschaft" beinhaltet alle durch ein berührendes oder berührungsloses Messverfahren quantifizierbaren Eigenschaften der Geometrie des Extrusionsprodukts. Als Beispiele seien das Dickenprofil des Extrusionsprodukts, die Breite des Extrusionsprodukts, die Einzelschichtdicke des Extrusionsprodukts oder die Oberflächenrauigkeit des Extrusionsprodukts genannt.

Eine "funktionale Eigenschaft" meint Eigenschaften des Extrusionsprodukts, die qualitativ oder quantitativ einer Funktion der Folie zugeordnet werden können. Beispielhaft sei hier an die Atmungsaktivität oder die Barrierewirkung des Extrusionsprodukts gedacht. Eine "Ausprägung" einer Eigenschaft beschreibt die Intensität oder Häufigkeit, mit der die Eigenschaft wahrgenommen werden kann. Diese Intensität kann mit einer Zahl beschrieben werden. Diese Zahl wird auch als "Eigenschaftswert" bezeichnet.

Ein "Datenerfassungssystem" dient zur Aufzeichnung physikalischer Messgrößen. Je nach verwendetem Sensor verfügt es über einen Analog-Digital-Wandler und einen Messwertspeicher oder Datenspeicher. Das Datenerfassungssystem kann mehrere Messgrößen erfassen.

Eine "Datenbank" ist ein System zur elektronischen Datenverwaltung. Die Aufgabe der Datenbank ist es, große Datenmengen effizient, widerspruchsfrei und dauerhaft zu speichern und benötigte Teilmengen der gespeicherten Daten in unterschiedlichen, bedarfsgerechten Darstellungsformen für Benutzer und Anwendungsprogramme bereitzustellen.

Ein "Algorithmus" ist eine eindeutige Handlungsvorschrift zur Lösung eines Problems oder einer Klasse von Problemen. Der Algorithmus besteht aus endlich vielen, definierten Einzelschritten. Somit können sie zur Ausführung in ein Computerprogramm implementiert, aber auch in menschlicher Sprache formuliert werden. Bei der Problemlösung wird eine bestimmte Eingabe in eine bestimmte Ausgabe überführt.

Der Stand der Technik sah bislang vor, dass die Abhängigkeiten bei einem Produktionsprozess eines Extrusionsprodukts zwischen einer Einstellgröße und einer Prozessgröße des Produktionsprozesses sowie einer Eigenschaft des hergestellten Extrusionsprodukts als Erfahrungswert des Bedieners der entsprechenden Produktionsvorrichtung im Betrieb der Produktionsvorrichtung erarbeitet wurden. Dies bedeutet, dass der Bediener die Produktionsvorrichtung beim in Betrieb nehmen, insbesondere durch einen Anfahrvorgang, individuell auf Basis der ihm bekannten Erfahrungswerte einstellt. Darüber hinaus steuert der Bediener während des laufenden Betriebs der Produktionsvorrichtung auftretende Abweichungen in den Eigenschaften eines Extrusionsprodukts auf Basis seiner ihm vorliegenden Erfahrungswerte durch einen korrigierenden Eingriff an mindestens einer Einstellgröße aus.

Mit steigender Komplexität der Produktionsvorrichtungen und Anforderungen an die Eigenschaften des Extrusionsprodukts wurden die benötigten Erfahrungswerte eines Bedieners der entsprechenden Produktionsvorrichtung stetig umfangreicher. Einhergehend damit stiegen auch die Trainingszeiten der Bediener und die Anforderungen bei der Auswahl geeigneter Bediener.

In jüngster Vergangenheit hat sich immer häufiger gezeigt, dass die vielfältigen Möglichkeiten des Bedieners auf die Eigenschaften eines Extrusionsprodukts Einfluss zu nehmen aufgrund der steigenden Komplexität auch infolge einer Überlagerung der Einflussfaktoren zunehmend das Verständnis des Bedieners einer Produktionsvorrichtung übersteigen. Vielfach ist die Anzahl der Einflussgrößen und die damit verbundene hohe Zahl an vorliegenden Abhängigkeiten zwischen einer Einstellgröße und einer Prozessgröße des Produktionsprozesses sowie einer Eigenschaft des hergestellten Extrusionsprodukts so hoch und so komplex, dass die zum Betrieb der Produktionsvorrichtung durch den Bediener notwendigen Erfahrungen nur sehr schwierig zu sammeln sind und die kognitiven Kapazitäten eines Menschen überwiegend übersteigt.

Damit verbunden stieg nicht nur der Aufwand der Betreiber von Produktionsvorrichtungen für Extrusionsprodukte zur Auswahl und Schulung der Bediener solcher Produktionsvorrichtungen. Darüber hinaus wurde der Betrieb entsprechender Produktionsvorrichtungen stetig problembehafteter, insbesondere bei der Herstellung von Extrusionsprodukten mit besonderen spezifischen Eigenschaften.

Abweichend wird hier vorgeschlagen, eine systematische Abhängigkeit bei einem Produktionsprozess eines Extrusionsprodukts zwischen einer Einstellgröße und einer Prozessgröße des Produktionsprozesses sowie einer Eigenschaft des hergestellten Extrusionsprodukts abzuleiten, indem eine Eigenschaft des Extrusionsprodukts und zeitsynchron oder entsprechend der Herstellgeschwindigkeit des Extrusionsprodukts zeitversetzt eine Einstellgröße und eine Prozessgröße als Parameter der Produktionsvorrichtung sowie des Produktionsprozesses inline bestimmt werden, auf einander Bezug nehmend in einer Datenbank gespeichert werden und systematisch die spezifische Abhängigkeit zwischen den Parametern abgeleitet wird.

Diese nach dem vorgeschlagenen Verfahren erarbeitete systematische Abhängigkeit zwischen einer Einstellgröße und einer Prozessgröße des Produktionsprozesses und einer Eigenschaft des hergestellten Extrusionsprodukts entspricht den Erfahrungswerten eines Bedieners in einer systematisierten Weise.

Bei einer geeigneten Umsetzung des Verfahrens wird so eine systematische Abhängigkeit aus Daten abgeleitet, die während der Herstellung eines Extrusionsprodukts aufgezeichnet werden und zusätzlich auch dem Eingriff eines erfahrenen Bedieners auf Basis seiner Erfahrungswerte unterliegen. Auf diese Weise werden zum Ableiten der systematischen Abhängigkeit Daten verwendet, die auf den Erfahrungen eines oder mehrerer erfahrener Bediener beruhen, sodass die Erfahrungen eines oder mehrerer Bediener einen Startpunkt für die Ableitung der systematischen Abhängigkeit darstellen.

Die hier vorgeschlagene systematische Abhängigkeit kann in einer besonders vorteilhaften Ausführung unterschiedliche und variierende Einflussgrößen aufweisen. Insbesondere besonders vorteilhaft ist eine Mehrzahl systematischer Abhängigkeiten mit unterschiedlichen Einflussgrößen.

So ist beispielsweise in einer besonders zugänglichen Variante die Ableitung einer systematischen Abhängigkeit zwischen einer einzelnen Eigenschaft eines Extrusionsprodukts und einer einzelnen Einstellgröße der Produktionsvorrichtung denkbar. Eine solche systematische Abhängigkeit kann vom Bediener oder von einer automatisierten Anlagensteuerung einer Produktionsvorrichtung beispielsweise zur Anpassung einer geforderten Eigenschaft des Extrusionsprodukts verwendet werden.

Konkret ist auch denkbar, dass eine Prozessgröße außer Acht gelassen wird. Mit anderen Worten gesagt würde die systematische Abhängigkeit die Berücksichtigung einer Prozessgröße ermöglich, doch sie muss nicht berücksichtigt werden.

Ebenso wird hier vorgeschlagen, eine systematische Abhängigkeit zwischen einer einzelnen Eigenschaft eines Extrusionsprodukts, einer einzelnen Prozessgröße des Produktionsprozesses und einer einzelnen Einstellgröße der Produktionsvorrichtung abzuleiten.

Eine spezifische Abhängigkeit, die mehr als eine Einflussgröße für eine Eigenschaft des Extrusionsprodukts aufweist, kann auf unterschiedlichste Art und Weise verwendet werden. In der Regel wird die Anwendung so aussehen, dass die Eigenschaft des Extrusionsprodukts in Abhängigkeit beispielsweise einer Prozessgröße und einer Einstellgröße Anwendung findet. Es soll jedoch darauf hingewiesen werden, dass weitere Interdependenzen und Beziehungen zwischen den Einflussgrößen und mindestens einer Eigenschaft des Extrusionsprodukts im Fokus anderer Verfahren relevant sein können. Auch an solche Abbildungen der einzelnen Parameter untereinander und die entsprechenden Varianten der Nutzung dieser spezifischen Abbildungen ist in diesem Zusammenhang ebenfalls gedacht.

Eine systematische Abhängigkeit zwischen einer einzelnen Eigenschaft eines Extrusionsprodukts, einer einzelnen Prozessgröße des Produktionsprozesses und einer einzelnen Einstellgröße der Produktionsvorrichtung kann beispielsweise derart vom Bediener oder von einer automatisierten Anlagensteuerung einer Produktionsvorrichtung genutzt werden, dass die Prozessgröße, hier sei beispielsweise an die Umgebungstemperatur, den Umgebungsdruck oder die Luftfeuchtigkeit gedacht, als Randbedingung der Produktion angesehen wird und unter Kenntnis dieser Randbedingung die Einstellgröße genutzt wird, um die Eigenschaft des Extrusionsprodukts anzupassen.

Eine derartige systematische Abhängigkeit kann jedoch auch durch eine Vielzahl anderer Möglichkeiten genutzt werden.

Hier sei beispielsweise konkret bei der Prozessgröße an die Temperatur des Zylinders eines Extruders gedacht. Insbesondere beim Anfahrvorgang der Produktionsvorrichtung kann es zu Schwankungen der Temperatur des Zylinders des Extruders kommen. Dabei ist konkret denkbar, dass die Temperatur des Zylinders des Extruders einen nicht zu vernachlässigenden Einfluss auf die geforderte Eigenschaft eines Extrusionsprodukts hat. Mit der systematischen Abhängigkeit zwischen einer Einstellgröße der Produktionsvorrichtung, einer Temperatur des Zylinders des Extruders als zeitlich variierende Prozessgröße eines Produktionsprozesses und der Eigenschaft eines Extrusionsprodukts kann so beispielsweise während dem Anfahrvorgang der Produktionsvorrichtung die Einstellgröße der Produktionsvorrichtung mit der sich verändernden Temperatur des Zylinders des Extruders im speziellen oder der Prozessgröße des Produktionsprozesses im allgemeinen im zeitlichen Verlauf so angepasst werden, dass die geforderte Eigenschaft des Extrusionsprodukts in allen denkbaren Zuständen erreicht werden kann.

Weiter wird vorgeschlagen, eine systematische Abhängigkeit zwischen einer einzelnen Eigenschaft eines Extrusionsprodukts, mindestens einer Prozessgröße des Produktionsprozesses und zwei oder mehr Einstellgrößen der Produktionsvorrichtung abzuleiten.

Eine solche systematische Abhängigkeit kann zur Anpassung einer Eigenschaft des Extrusionsprodukts so eingesetzt werden, dass in Abhängigkeit der jeweils vorliegenden Randbedingungen in Form der Prozessgröße oder der Prozessgrößen des Produktionsprozesses die optimale Kombination der Einstellgrößen der Produktionsvorrichtung verwendet wird.

Ebenfalls ist denkbar, dass eine Einstellgröße vorübergehend nicht verstellt werden kann. Dies kann aus einem technischen Defekt resultieren oder auch in Folge einer anderweitigen zwingenden Randbedingung der Fall sein. Für solche Fälle wird hier vorgeschlagen, diese eine nicht verstellbare Einflussgröße mit ihrem aktuellen Istwert zu verwenden und die entsprechende systematische Abhängigkeit mit der Randbedingung zu nutzen, dass diese eine nicht verstellbare Einflussgröße nicht verstellbar ist. Dadurch wird mit Blick auf die Zielerreichung optimaler Eigenschaften des Extrusionsprodukts zwar eine Verschlechterung eintreten. Diese muss jedoch nicht messbar sein oder dazu führen, dass das Extrusionsprodukt die geforderten Spezifikationen nicht mehr erreicht.

Bei heutigen Extrusionsprodukten ist es üblich, dass mehr als eine Eigenschaft des fertigen Extrusionsprodukts gefordert wird. Somit muss im Rahmen des Produktionsvorgangs auch mehr als eine Eigenschaft des Extrusionsprodukts sichergestellt werden.

Dazu wird vorgeschlagen, eine systematische Abhängigkeit zwischen zwei oder mehr Eigenschaften eines Extrusionsprodukts, mindestens einer Prozessgröße des Produktionsprozesses und zwei oder mehr Einstellgrößen der Produktionsvorrichtung abzuleiten.

Diese multidimensionale systematische Abhängigkeit wird dann verwendet, um mehrere Eigenschaften eines Extrusionsprodukts gleichzeitig und unter Berücksichtigung sämtlicher denkbarer Randbedingungen zu optimieren.

In dem vorliegend beschriebenen Fall ist eine multikriterielle Optimierungsaufgabe zu lösen, welche für diese multikriterielle Fragestellung jeweils die optimalen Einstellgrö-βen bestimmt. Hierfür wird vorgeschlagen, entsprechende Algorithmen zur Lösung multikriterieller Fragestellung zur Bestimmung der jeweils optimalen Werte für die Einstellgrößen zu finden. Entsprechende Algorithmen sind insbesondere GDE3 oder NSGA-II oder vergleichbare Verfahren.

In diesem Zusammenhang wird konkret vorgeschlagen, die Pareto-Fronten zwischen den einzelnen Einflussgrößen auszuwerten und beispielsweise für den Erkenntnisgewinn zu nutzen, wie sich die Einflussgrößen untereinander bedingen.

Bei einer großen Anzahl an Einstellgrößen einer Produktionsvorrichtung kann es vorkommen, dass beim Ableiten einer systematischen Abhängigkeit zeitweise nicht hinreichend viele Daten vorliegen oder die Einflussgrößen so viele Abhängigkeiten untereinander aufweisen, dass das Bestimmtheitsmaß der systematischen Abhängigkeit unterhalb einer Schwelle von 0,96 liegt. Für diese Fälle wird hier konkret vorgeschlagen, dass für die vorliegenden Daten eine Mehrzahl von systematischen Abhängigkeiten mit unterschiedlichen Einflussgrößen abgeleitet werden. Dabei kann die Mehrzahl an systematischen Abhängigkeiten im Maximum die Anzahl der kombinatorisch möglichen Varianten erreichen.

Für die Auswahl der zumindest vorübergehend Anwendung findenden systematischen Eigenschaft wird vorgeschlagen, diejenige systematische Abhängigkeit auszuwählen, welche einerseits die Erreichung der an die Produktion des spezifischen Extrusionsprodukts gesetzten Zielsetzungen erfüllt und andererseits das höchste Bestimmtheitsmaß in der Menge der nach dem ersten Kriterium möglichen systematischen Abhängigkeiten aufweist.

Natürlich kann dieser Aspekt der Auswahl einer systematischen Abhängigkeit entsprechend dem Bestimmtheitsmaß der systematischen Abhängigkeit auch in anderen Situationen vorteilhaft eingesetzt werden.

Ein wesentliches Merkmal der Erfindung besteht in der geordneten auf einander Bezug nehmenden Speicherung der Daten bestehend aus einer Eigenschaft eines Extrusionsprodukts, mindestens einem Parameter der Produktionsvorrichtung und wahlweise in Form einer Prozessgröße einem oder mehreren Parametern des Produktionsprozesses aus der Produktion des Extrusionsprodukts. Damit die Daten auf einander Bezug nehmend gespeichert werden können, ist es besonders wichtig, die Daten zeitsynchron oder entsprechend der Herstellgeschwindigkeit des Extrusionsprodukts zeitversetzt abzuspeichern. In einer besonders vorteilhaften Ausführungsform werden die zu speichernden Daten inline bestimmt.

Es versteht sich, dass bei einer systematischen Abhängigkeit nicht zwingend eine Abhängigkeit zwischen zwei oder drei Größen gemeint ist. Vielmehr kann eine Abhängigkeit zwischen zwei oder drei Größen gemeint sein, jedoch werden auch multidimensionale systematische Abhängigkeiten mit einer Vielzahl von in Bezug zu einander stehenden Größen mit steigender Komplexität der Produktionsvorrichtungen und Extrusionsprodukte immer wahrscheinlicher und alltäglicher.

Vorteilhaft kann durch den hier vorgestellten Aspekt der Erfindung erreicht werden, dass eine systematische Abhängigkeit bei einem Produktionsprozess eines Extrusionsprodukts zwischen einer Einstellgröße und einer Prozessgröße des Produktionsprozesses sowie einer Eigenschaft des hergestellten Extrusionsprodukts abgeleitet werden kann. Dies erfolgt während der Herstellung eines Extrusionsprodukts und wahlweise auch während dem Eingriff eines Bedieners auf Basis seiner Erfahrungswerte. Die Erfahrungen erfahrener Anlagenbediener werden demnach Teilbestandteil einer systematischen Abhängigkeit, da sich diese durch die Erfahrungen der Bediener auf die relevanten Bereiche erstreckt. Dadurch können auch die unterschiedlichen Erfahrungen mehrerer Bediener in einer systematischen Abhängigkeit agglomeriert werden.

Ein weiterer Vorteil ergibt sich dadurch, dass die systematische Abhängigkeit kontinuierlich bei der Herstellung eines Extrusionsprodukts präzisiert wird. Vorteilhaft ergibt sich damit beispielsweise auch eine Erstreckung der systematischen Abhängigkeit auf selten erreichte jedoch für den Eingriff eines Bedieners wesentliche Betriebspunkte.

Durch die stetige Präzisierung der systematischen Abhängigkeit ergibt sich in einer vorteilhaften Ausgestaltung des Verfahrens die Möglichkeit, die Robustheit der systematischen Abhängigkeit zu überprüfen. Damit lässt sich quantifizieren, ob es sich bei der systematischen Abhängigkeit um eine Gesetzmäßigkeit oder eine Tendenz mit gewissen und durch die stetige Präzisierung erfassbaren Wahrscheinlichkeiten handelt. Weiterhin kann dabei der Grad und die Wahrscheinlichkeit der Ausprägung einer Einstellgröße und wahlweise einer Prozessgröße hinsichtlich der einer Eigenschaft eines Extrusionsprodukts quantifiziert werden.

Ein systembedingter Vorteil ergibt sich weiterhin daraus, dass die Daten auf einander Bezug nehmend gespeichert werden können. Dabei wird bei einer geeigneten Umsetzung des Verfahrens darauf geachtet, dass die Daten zeitlich so synchronisiert werden, dass eine Änderung einer Einstellgröße und die dadurch herbeigeführte Auswirkung auf die optische Eigenschaft eines Extrusionsprodukts möglichst scharf und präzise abgebildet werden kann. Dabei ist ein weiterer wesentlicher Parameter der Produktionsvorrichtung aus der Herstellung des Extrusionsprodukts die Produktionsgeschwindigkeit des Extrusionsprodukts, damit die gegebenenfalls inline erfassten Daten hinsichtlich der Änderung einer Einstellgröße und/oder Prozessgröße und der dadurch herbeigeführten Auswirkung auf die Eigenschaft eines Extrusionsprodukts auf einander Bezug nehmend gespeichert werden können.

Während Bediener einer Produktionsvorrichtung besonders in kritischen Situationen emotionalem Handeln unterliegen, gibt die nach diesem Aspekt der Erfindung abgeleitete systematische Abhängigkeit bei einem Produktionsprozess eines Extrusionsprodukts zwischen einer Einstellgröße der Produktionsvorrichtung, einer Prozessgröße des Produktionsprozesses und einer Eigenschaft des hergestellten Extrusionsprodukts eine objektive Beschreibung des Sachverhaltes wieder.

Vorteilhaft ergibt sich durch das hier beschriebene Verfahren auch, dass eine nahezu nicht limitierte Vielzahl von Parametern auf einander Bezug nehmend gespeichert werden und zur Ableitung einer systematischen Abhängigkeit herangezogen werden können. Ein Bediener einer entsprechenden Produktionsvorrichtung ist hinsichtlich seiner Auffassungsfähigkeit diesbezüglich naturgemäß beschränkt. Im Besonderen durch die stetig steigende Komplexität entsprechender Produktionsvorrichtungen und durch die steigende Anzahl von erreichbaren Eigenschaften eines Extrusionsprodukts erreicht ein Bediener heutzutage oftmals bereits die Grenzen seiner naturgemäßen Beschränkung seiner Auffassungsfähigkeit. Weiterhin werden bei einer geeigneten Umsetzung des Verfahrens eine Vielzahl unterschiedlicher Erfahrungen, insbesondere auch Erfahrungen unterschiedlicher Bediener, erfasst, agglomeriert, konserviert und für die Ableitung einer systematischen Abhängigkeit bei einem Produktionsprozess eines Extrusionsprodukts zwischen einer Einstellgröße des Produktionsprozesses und einer Eigenschaft des hergestellten Extrusionsprodukts verwendet.

So können bei einer geeigneten Umsetzung des vorgeschlagenen Verfahrens komplexe Zusammenhänge zwischen den Parametern des Verfahrens abgebildet werden. Dies betrifft insbesondere Abhängigkeiten mit einer Vielzahl von in Bezug zu einander stehenden Größen, welche diverse Abhängigkeiten mit aussagekräftigen Korrelationen und Paretofronten der Einflussgrößen zueinander zu einander aufweisen können.

Bevorzugt wird eine Ausprägung einer Eigenschaft des Extrusionsprodukts inline bestimmt.

Begrifflich sei hierzu Folgendes erläutert:
Unter "inline" wird verstanden, dass die Eigenschaft des Extrusionsprodukts während des laufenden Produktionsprozesses des Extrusionsprodukts bestimmt wird. Beispielsweise kann eine Eigenschaft des Extrusionsprodukts inline bestimmt werden, indem ein Sensor eine Eigenschaft anhand des den Sensor passierenden Materialstroms des Extrusionsprodukts bestimmt.

So wird vorgeschlagen, dass die Ausprägung einer Eigenschaft eines Extrusionsprodukts während des laufenden Produktionsprozesses bei laufender Produktionsvorrichtung beispielsweise mit einem geeigneten Sensor direkt am durch die Messung unbeschädigten Extrusionsprodukt bestimmt wird.

Vorteilhaft kann damit erreicht werden, dass die Ausprägung einer Eigenschaft unmittelbar, schnell und zeitsynchron mit anderen Werten, insbesondere von einer Einstellgröße und/oder einer Prozessgröße gemessen werden kann. Dadurch können die Daten der unterschiedlichen Parameter schnell bestimmt und unmittelbar in der Datenverarbeitungs- und -auswerteeinheit erfasst werden.

Insbesondere erlaubt die inline Bestimmung einer Eigenschaft eines Extrusionsprodukts vorteilhaft eine hohe Anzahl an individuellen Datenpunkten. Außerdem kann so vergleichsweise einfach die Reaktion der Eigenschaft eines Extrusionsprodukts auf kleine Änderungen in den Einstellgrößen erfasst werden.

Nachdem eine inline Bestimmung der Eigenschaft eines Extrusionsprodukts nahezu keine Totzeiten für die Ermittlung der Ausprägung der Eigenschaft hervorruft, ist eine besonders schnelle Bestimmung der Eigenschaft vorteilhaft möglich.

Die inline Bestimmung der Ausprägung einer Eigenschaft eines Extrusionsprodukt erlaubt es vorteilhaft in vergleichsweise kurzer Zeit eine systematische Abhängigkeit zwischen den einzelnen Parametern ableiten zu können.

Ebenfalls wird vorteilhaft erreicht, dass das Extrusionsprodukt in einem kontinuierlichen Produktionsprozess nicht beschädigt werden muss, um beispielsweise eine Probe für eine Bestimmung der Ausprägung einer Eigenschaft im Labor durchführen zu können.

Optional wird eine Ausprägung einer Eigenschaft des Extrusionsprodukts offline bestimmt.

Begrifflich sei hierzu Folgendes erläutert:
Unter "offline" wird verstanden, dass die Eigenschaft des Extrusionsprodukts nicht während des laufenden Produktionsprozesses des Extrusionsprodukts bestimmt wird. Beispielsweise kann eine Eigenschaft des Extrusionsprodukts offline bestimmt werden, indem eine Probe des Extrusionsprodukts genommen wird und anhand dieser Probe eine Eigenschaft des Extrusionsprodukts bestimmt wird. Beispielsweise kann die Probe in einem Labor untersucht und dabei eine oder auch mehrere Eigenschaften des Extrusionsprodukts bestimmt werden.

So wird vorgeschlagen, dass die Ausprägung einer Eigenschaft des Extrusionsprodukts nicht im kontinuierlichen Produktionsprozess, sondern anhand einer Materialprobe des Extrusionsprodukts in einem Labor bestimmt wird.

Dabei ist unter anderem denkbar, dass die im Labor ermittelten Ausprägungen einer Eigenschaft des Extrusionsprodukts über eine Datenschnittstelle mit den Istwerten der Einstellgrößen der Produktionsvorrichtung und mit den Istwerten der Prozessgrößen des Produktionsprozesses in der Datenerfassungs- und -auswerteeinheit der Produktionsvorrichtung synchronisiert werden. Die Synchronisation erfolgt dabei derart, dass die im Labor gewonnenen Daten über die Ausprägung einer Eigenschaft eines Extrusionsprodukts genau den Werten der Einstellgrößen der Produktionsvorrichtung und der Prozessgrößen des Produktionsprozesses zugeordnet werden, die zu dem Zeitpunkt vorgelegen haben, zu dem die entsprechende Materialprobe des Extrusionsprodukts hergestellt wurde.

Dabei kann die Datenschnittstelle direkt im Labor vorliegen, sodass die Daten im Labor manuell oder automatisch über die Datenschnittstelle eingepflegt werden können, oder die Daten werden an der Produktionsvorrichtung manuell oder automatisch über eine geeignete Schnittstelle in der Datenerfassungs- und -auswerteeinheit eingepflegt.

Ebenfalls wird unter anderem vorgeschlagen, dass die Daten nach dem Einpflegen der Daten anhand der bekannten systematischen Abhängigkeit zwischen den ermittelten Parametern auf Plausibilität überprüft werden. Weicht ein ermittelter und eingepflegter Datenpunkt um das doppelte des entsprechend des vorliegenden Bestimmtheitsmaßes für die systematische Abhängigkeit zu erwartenden Betrages ab, so wird vorgeschlagen, dass der Datenpunkt wegen seiner Auswirkungen auf die systematische Abhängigkeit manuell kontrolliert und bestätigt werden muss.

Weiterhin wird unter anderem vorgeschlagen, dass bis zum Schichtende des Bedieners unvollständig gebliebene Datenpunkte am Ende seiner Schicht von ihm für eine Wiedervorlage markiert werden, die in der nächsten Schicht dieses Bedieners erfolgt. Sollte der Datenpunkt trotz Wiedervorlage und verstreichen des dreifachen Zeitraums, der für die Ermittlung der Ausprägung einer Eigenschaft des Extrusionsprodukts erwartet wird, nicht vervollständigt werden können, wird konkret vorgeschlagen, dass der Bediener entscheidet, ob er den Datenpunkt löscht oder ob er eine erneute Wiedervorlage für den Datenpunkt notiert.

Der Grad der hier vorgeschlagenen Laborautomation reicht von der einfachen Eingabemaske bis zur digitalen Anbindung von Laborausrüstung an das Datenerfassungssystem der Anlage.

Vorteilhaft kann damit erreicht werden, dass die Ausprägung einer Eigenschaft des Extrusionsprodukts genauer bestimmt werden kann, als dies inline an der Produktionsvorrichtung möglich ist.

Dadurch und durch die Plausibilitätsüberprüfung der Datenpunkte kann unter anderem vorteilhaft erreicht werden, dass die Fehler in den verfügbaren Daten reduziert werden können.

Außerdem kann vorteilhaft erreicht werden, dass die systematische Abhängigkeit zwischen den ermittelten Parametern in Folge der höheren Datenqualität zu einer höheren Vorhersagegüte der systematischen Abhängigkeit führt.

Insgesamt lässt sich dadurch auch erreichen, dass der Aufwand für die Erstellung einer systematischen Abhängigkeit mit einem hohen Bestimmtheitsmaß deutlich reduziert werden kann.

Bevorzugt wird die systematische Abhängigkeit der Parameter in Form einer ein Bestimmtheitsmaß aufweisenden Kurve bestimmt.

Begrifflich sei hierzu Folgendes erläutert:
Unter den Parametern wird hier konkret unter anderem mindestens eine Ausprägung einer Eigenschaft eines Extrusionsprodukts, mindestens eine Einstellgröße der Produktionsvorrichtung und wahlweise zusätzlich mindestens eine Prozessgröße des Produktionsprozesses verstanden. In der Regel wird hier unter den Parametern konkret mindestens eine Ausprägung einer Eigenschaft eines Extrusionsprodukts, mindestens eine Einstellgröße der Produktionsvorrichtung und mindestens eine Prozessgröße des Produktionsprozesses verstanden.

So wird hier unter anderem vorgeschlagen, dass eine Eigenschaft eines Extrusionsprodukts in Abhängigkeit einer Einstellgröße der Produktionsvorrichtung oder in Abhängigkeit einer Prozessgröße des Produktionsprozesses oder in Abhängigkeit einer Einstellgröße der Produktionsvorrichtung und in Abhängigkeit einer Prozessgröße des Produktionsprozesses bestimmt wird.

Ein "Bestimmtheitsmaß" ist ein Gütemaß, welches angibt, wieviel Prozent der Varianz in den Daten durch ein Regressionsmodell erklärt werden kann. Indirekt wird damit auch der Zusammenhang zwischen der abhängigen und den unabhängigen Variablen gemessen.

Vorteilhaft kann hierdurch erreicht werden, dass die systematische Abhängigkeit durch eine Kurve in Abhängigkeit einer Einstellgröße der Produktionsvorrichtung und/oder einer Prozessgröße des Produktionsprozesses angegeben ist, insbesondere weist diese Kurve keine Lücken auf, so dass eine eindeutige Zuweisung zwischen einer Einstellgröße oder einer Prozessgröße und einer Eigenschaft des Extrusionsprodukts erreicht werden kann. Für die Abhängigkeit von einer Einstellgröße und einer Prozessgröße wird vorliegend konkret unter anderem vorgeschlagen, dass die systematische Abhängigkeit beispielsweise durch eine Kurvenschar angegeben wird.

Die Auswertung eines Bestimmtheitsmaßes aus den ermittelten Daten und der mittels eines Regressionsmodells bestimmten Kurve ergibt einen Anhaltspunkt für die Präzision der systematischen Abhängigkeit eines Extrusionsprodukts zwischen einer Einstellgröße des Produktionsprozesses und einer optischen Eigenschaft der hergestellten Folienbahn, voraussetzend, dass eine ausreichende Anzahl von Datenpunkten vorhanden ist. Vorteilhaft kann damit bewertet werden, wie aussagekräftig eine Korrelation zwischen einer Einstellgröße des Produktionsprozesses und einer optischen Eigenschaft ist und wie gut sich vorhandene Daten reproduzieren lassen. Außerdem ermöglicht die Kurve im Falle eines großen Bestimmtheitsmaßes auch Aussagen über die Ränder vorliegender Daten. So können Daten numerisch ergänzt und/oder an den Randgebieten vorliegender Daten extrapoliert werden.

Optional wird die systematische Abhängigkeit der Parameter durch einen Einstellbereich bestimmt, der in Abhängigkeit des Normalbereiches und/oder des Warnbereiches und/oder des Alarmbereiches für die Eigenschaft des Extrusionsprodukts steht.

Begrifflich sei hierzu Folgendes erläutert:
Ein "Einstellbereich" ist ein Bereich, in welchem eine Einstellgröße verstellt werden kann. Mit anderen Worten ist es der Bereich der Einstellgröße zwischen einem minimalen Einstellgrößensollwert und einem maximalen Einstellgrößensollwert.

Vorteilhaft kann hierdurch zweierlei unabhängig und wahlweise auch in Kombination miteinander erreicht werden.

Einerseits ermöglicht eine spezifische Abhängigkeit eines Extrusionsprodukts zwischen einer Einstellgröße der Produktionsvorrichtung, einer Prozessgröße des Produktionsprozesses und einer Eigenschaft des hergestellten Extrusionsprodukts in Abhängigkeit eines Einstellbereichs, dass keine nicht anwendbaren Abhängigkeiten vorliegen können, also keine Aussagen über nicht einstellbare Werte einer Einstellgröße vorliegen können.

Andererseits ermöglicht ein Einstellbereich, der in Abhängigkeit eines vorgegebenen Schwellenwertes für die Eigenschaft des Extrusionsprodukts steht, dass durch die systematische Abhängigkeit eines Extrusionsprodukts zwischen einer Einstellgröße der Produktionsvorrichtung, einer Prozessgröße des Produktionsprozesses und einer Eigenschaft des hergestellten Extrusionsprodukts nur Aussagen über Einstellbereiche getroffen werden können, die in Abhängigkeit eines vorgegebenen Schwellenwertes für die Eigenschaft des Extrusionsprodukts stehen.

Bevorzugt wird die systematische Abhängigkeit in Form einer Hüllkurve, die auch als Einhüllende oder Envelope bezeichnet werden kann, bestimmt, welche in Abhängigkeit des Normalbereiches und/oder des Warnbereiches und/oder des Alarmbereiches für die Eigenschaft des Extrusionsprodukts steht.

Begrifflich sei hierzu Folgendes erläutert:
Unter einer "Hüllkurve" wird eine geschlossene Kurve verstanden, die eine Fläche umschließt. Dabei kann die Fläche von einer Isolinie umschlossen werden, die beispielsweise die Grenzlinie zwischen dem Normalbereich und dem Warnbereich oder die Grenzlinie zwischen dem Warnbereich und dem Alarmbereich oder die Außenlinie des Alarmbereichs beschreibt. Ebenfalls ist konkret unter anderem denkbar, dass die Hüllkurve die Bereichsgrenzen eines Betriebsbereichs einer Produktionsvorrichtung umschließt.

Vorteilhaft kann hierdurch erreicht werden, dass insbesondere solche systematischen Abhängigkeiten mit mehr als zwei Eingangsgrößen, insbesondere Einstellgrößen und/oder Prozessgrößen, geordnet ausgewertet, dargestellt und verwendet werden können.

Ebenfalls vorteilhaft können die Grenzen einer Hüllkurve in Abhängigkeit technischer Restriktionen und/oder spezifischer Anforderungsprofile begrenzt werden, wodurch die Vorteile von Schwellenwerten für systematische Abhängigkeiten zwischen zwei Parametern auf systematische Abhängigkeiten mit mehr als zwei Parametern erweitert werden können.

Optional wird die systematische Abhängigkeit zwischen den Parametern heuristisch bestimmt.

So wird hier unter anderem vorgeschlagen trotz begrenztem Wissen über die systematische Abhängigkeit und trotz nur begrenzt vorhandener Datenpunkte der einzelnen Parameter und wenig Zeit dennoch zu wahrscheinlichen Aussagen oder praktikablen Lösungen zu kommen. Dabei wird mit Hilfe eines analytischen Vorgehens auf eine systematische Abhängigkeit der Parameter geschlossen werden.

Vorteilhaft kann hierdurch erreicht werden, dass selbst bei einer beschränkten Anzahl von Daten oder selbst bei Datenlücken und bei beschränkten zeitlichen Ressourcen eine praktikable systematische Abhängigkeit bestimmt werden kann.

Bevorzugt wird die systematische Abhängigkeit zwischen den Parametern mathematisch bestimmt.

So wird hier unter anderem vorgeschlagen die systematische Abhängigkeit unter Mitwirkung einer mathematischen Vorschrift zu bestimmen.

Vorteilhaft kann hierdurch erreicht werden, dass die Wissenschaft der Mathematik derart verwendet wird, dass ein im mathematischen Sinne möglichst eindeutige systematische Abhängigkeit abgeleitet werden kann.

Optional wird die systematische Abhängigkeit zwischen den Parametern mit einem Optimierungsverfahren bestimmt.

In einer geeigneten sowie vorteilhaften Umsetzung dieses Verfahrens dienen Optimierungsverfahren der Minimierung von Unsicherheiten von systematischen Abhängigkeiten. Mit anderen Worten werden die Bestimmtheitsmaße von systematischen Abhängigkeiten maximiert. Somit wird die Beschreibung einer systematischen Abhängigkeit präzisiert.

Dabei wird unter anderem vorgeschlagen für multikriterielle Fragestellungen auch Optimierungsverfahren anzuwenden, die für eine multikriterielle Optimierung geeignet sind. Insbesondere sei hier beispielsweise an Verfahren der generalisierten differentiellen Evolution oder an Verfahren auf Basis neuronaler Netze gedacht.

So kann in einer vorteilhaften Umsetzung des Verfahrens ein Optimierungsverfahren dazu eingesetzt werden mehrdimensionale Abhängigkeiten zwischen Parametern aufzudecken, zu analysieren und zu beschreiben.

Vorteilhaft kann hierdurch erreicht werden, dass der Einsatz von Optimierungsverfahren zu präziseren systematischen Abhängigkeiten führt und komplexe Zusammenhänge zwischen den Daten besser identifiziert und genutzt werden können.

Insbesondere kann vorteilhaft erreicht werden, dass systematische Abhängigkeiten auch bei multikriteriellen Zielsetzungen abgeleitet werden können.

Bevorzugt wird die systematische Abhängigkeit zwischen den Parametern mit einem selbstlernenden Optimierungsverfahren bestimmt.

Begrifflich sei hierzu Folgendes erläutert:
Unter einem "selbstlernenden Optimierungsverfahren" wird ein Klasse von Algorithmen verstanden, der auch unter dem Oberbegriff des "Maschinellen Lernens" eingeordnet werden kann. Ein entsprechender Algorithmus zeichnet sich dadurch aus, dass einerseits aus Beispielen lernt und andererseits das gelernte Wissen verallgemeinern kann. Damit erzeugt ein solcher Algorithmus Wissen aus Erfahrung.

So wird unter anderem vorgeschlagen einen Algorithmus zu verwenden, der die Merkmale eines Algorithmus aus der Klasse des Maschinellen Lernens aufweist. Dadurch ist der Algorithmus in der Lage aus einigen Erfahrungswerten des Bedieners oder mehrerer Bediener oder auf der Basis von Erfahrungswerten eines Bedieners in Kombination mit gemessenen Parametern eine systematische Abhängigkeit zwischen den Parametern abzuleiten.

Vorteilhaft kann hierdurch erreicht werden, dass die komplexen Aufgaben durch den Einsatz von selbstlernenden Optimierungsverfahren nicht aufwändig durch den Menschen an neue Gegebenheiten angepasst werden müssen. Somit kann Zeit und Geld bei der Ableitung systematischer Abhängigkeiten eingespart werden. Insbesondere ist es mit dem hier vorgeschlagenen Vorgehen vorteilhaft möglich eine bestehende systematische Abhängigkeit um eine weitere Einflussgröße zu erweitern. Somit kann das Wissen bestehender Produktionsvorrichtungen einfacher auf komplexere Produktionsvorrichtungen oder Produktionsvorrichtungen mit neuen Einstellgrößen oder Prozessgrößen erweitert werden.

Es sei ausdrücklich darauf hingewiesen, dass der Gegenstand des dritten Aspekts mit dem Gegenstand der vorstehenden Aspekte der Erfindung vorteilhaft kombinierbar ist, und zwar sowohl einzeln oder in beliebiger Kombination kumulativ.

Nach einem vierten Aspekt der Erfindung löst die Aufgabe ein Verfahren zum Anpassen der Qualität eines mit einer Produktionsvorrichtung hergestellten Extrusionsprodukts, wobei die Qualität inline bestimmt und angepasst wird, wobei eine Ausprägung einer Eigenschaft des Extrusionsprodukts bestimmt wird, eine Messgröße, insbesondere Prozessgröße, des Produktionsprozesses mittels eines Sensors bestimmt wird, und ein Einstellgrößensollwert anhand der bestimmten Eigenschaft und der Messgröße, insbesondere der Prozessgröße, inline angepasst wird, wobei das Anpassen der Einstellgröße durch Verstellen eines Stellglieds erfolgt, wobei der Einstellgrößensollwert zur bestimmten Ausprägung der Eigenschaft und zur Messgröße, insbesondere Prozessgröße, durch eine systematische Abhängigkeit beschrieben wird, die mit einem Verfahren nach dem dritten Aspekt der Erfindung bestimmt ist, und durch das Anpassen der Einstellgröße die Qualität des Extrusionsprodukts derart verändert wird, dass eine gewünschte Eigenschaft in ihrer Ausprägung verstärkt und/oder eine ungewünschte Eigenschaft in ihrer Ausprägung reduziert wird.

Begrifflich sei hierzu Folgendes erläutert:
Ein "Stellglied" oder auch "Aktor" ist im speziellen dazu geeignet, eine Ausgangsgröße eines Systems zu beeinflussen.

Ein "Schwellenwert" ist eine minimale oder eine maximale Ausprägung einer Eigenschaft eines Extrusionsprodukts.

Eine "Steuerung" ist eine Verstellung einer Einstellgröße.

Eine "Regelung" ist ein Zusammenspiel aus stetiger Erfassung einer Messgröße und der Steuerung eines Systems in Abhängigkeit einer Vorgabe für die Messgröße. Dabei findet ein stetiger Vergleich der Messgröße und der Vorgabe für die Messgröße statt.

Der Stand der Technik sah bislang vor, dass ein Bediener einer Produktionsvorrichtung zum Herstellen eines Extrusionsprodukts die Qualität des hergestellten Extrusionsprodukts entsprechend gesammelter Erfahrungen durch Verstellen einer Einstellgröße einstellt. Bemerkt der Bediener während der Produktion eine Extrusionsprodukts auftretende Qualitätsabweichungen, so bedient er sich gemachter Erfahrungswerte und verstellt eine Einstellgröße derart, dass sich eine gewünschte Qualität des Extrusionsprodukts einstellt. Dieser Prozess wird oftmals iterativ so lange durchgeführt, bis die gewünschte Qualität des Extrusionsprodukts erreicht ist. Bei erneut auftretenden Abweichungen der Qualität wiederholt der Bediener der Produktionsvorrichtung diesen Prozess. Diesen Stand der Technik kann man auch als Benutzersteuerung einer Produktionsvorrichtung zum Herstellen eines Extrusionsprodukts bezeichnen.

Eine Eigenschaft eines Extrusionsprodukts begutachtet der Bediener einer Produktionsvorrichtung zum Herstellen eines Extrusionsprodukts im Stand der Technik oftmals direkt oder indirekt inline mit seinen Augen. Funktionale Qualitätsmerkmale eines Extrusionsprodukts, die nicht mit dem Auge begutachtet werden können, werden im Stand der Technik nicht inline bestimmt. Dazu wird der Produktion eine Materialprobe des eines Extrusionsprodukts entnommen und offline zumeist in einem Labor analysiert.

Abweichend wird hier vorgeschlagen, die nach dem dritten Aspekt der Erfindung gewonnene systematische Abhängigkeit zum Anpassen der Qualität des Extrusionsprodukts einzusetzen.

Dazu wird eine Ausprägung einer Eigenschaft des Extrusionsprodukts beispielsweise mit einem Sensor bestimmt und die nach dem dritten Aspekt der Erfindung gewonnene systematische Abhängigkeit zur Anpassung der Qualität der Folienbahn derart eingesetzt, dass der zur Erreichung der gewünschten Qualität des Extrusionsprodukts benötigte Einstellwert der Produktionsvorrichtung zur Herstellung des Extrusionsprodukts aus der systematischen Abhängigkeit hervorgeht.

Dabei wird hier konkret unter anderem vorgeschlagen, dass hierzu auch eine Abhängigkeit von einem Istwert einer Prozessgröße des Produktionsprozesses mitberücksichtigt wird.

Vorteilhaft kann durch den hier vorgestellten Aspekt der Erfindung erreicht werden, dass der Bediener einer Produktionsvorrichtung zum Herstellen eines Extrusionsprodukts ein geringeres Maß an individuellen Erfahrungswerten aufweisen kann. Somit kann die Auswahl geeigneter Bediener für die Produktionsvorrichtung zur Herstellung eines Extrusionsprodukts vereinfacht werden.

Überdies können die notwendigen Schulungsmaßnahmen der Bediener vorteilhaft weniger auf das Übermitteln bestehender Erfahrungswerte fokussiert werden und lassen sich so drastisch beschleunigen, da sich der Bediener der Produktionsvorrichtung bei der Anpassung der Qualität des Extrusionsprodukts einer systematischen Abhängigkeit bedienen kann.

Die Verwendung einer systematischen Abhängigkeit bei der Anpassung der Qualität eines Extrusionsprodukts kann weiterhin vorteilhaft dazu führen, dass Veränderungen an den Werten der Einstellgrößen der Produktionsvorrichtung weniger emotional durchgeführt werden, wodurch die menschliche Komponente bei der Fehlersensitivität des Qualitätsanpassungsprozesses reduziert werden kann. Dadurch steigt die Erfolgswahrscheinlichkeit und die Nachhaltigkeit einer Qualitätsanpassung auch bei erhöhter Belastung des Bedieners der Produktionsvorrichtung.

Außerdem kann der normalerweise iterativ ablaufende Prozess der Anpassung der Qualität des Extrusionsprodukts während der Herstellung des Extrusionsprodukts vorteilhaft beschleunigt werden, insbesondere, da die Anpassung nicht mehr rein iterativ ablaufen muss, sodass insgesamt der Anteil des Extrusionsprodukts steigen kann, welcher höchste Qualitätsmerkmale aufweist. Entsprechender Ausschuss von hergestelltem Extrusionsprodukts kann somit reduziert werden.

Vorteilhaft lässt sich hierdurch auch erreichen, dass die Anpassung der Qualität des Extrusionsprodukts auch die oftmals als Randbedingung des Produktionsprozesses wahrgenommenen Prozessgrößen mitberücksichtigen kann, wodurch die Qualität des Extrusionsprodukts noch genauer eingestellt werden kann.

Weiterhin kann mit dem vorgeschlagenen Verfahren die Anpassung der Qualität des Extrusionsprodukts auch unter widrigen Bedingungen automatisiert werden.

Bevorzugt wird eine Ausprägung einer Eigenschaft des Extrusionsprodukts inline bestimmt.

Hier wird also konkret vorgeschlagen, dass eine Ausprägung einer Eigenschaft des Extrusionsprodukts nicht in einem Labor bestimmt werden muss, sondern die Bestimmung inline während der Herstellung des Extrusionsprodukts an der Produktionsvorrichtung erfolgt.

Vorteilhaft kann damit erreicht werden, dass durch die inline gemessene Ausprägung einer Eigenschaft des Extrusionsprodukts auch eine Anpassung der Qualität eines Extrusionsprodukts inline erfolgen kann, da die Ausprägung der Eigenschaft direkt nach der Messung in der Datenverarbeitungs- und -auswerteeinheit vorliegt und somit direkt und ohne größere Totzeiten für die Anpassung der Qualität des Extrusionsprodukts verwendet werden kann.

Optional wird eine Ausprägung einer Eigenschaft des Extrusionsprodukts offline bestimmt wird.

Vorteilhaft kann damit erreicht werden, dass die Ausprägung der Eigenschaft des Extrusionsprodukts mit einer höheren Genauigkeit bestimmt werden kann und somit auch die Anpassung der Qualität der Eigenschaft des Extrusionsprodukts mit einer höheren Genauigkeit erfolgen kann.

Bevorzugt weist die Qualität des Extrusionsprodukts eine geometrische Eigenschaft auf.

Beispiele einer geometrischen Eigenschaft eines Extrusionsprodukts sind dessen Abmessungen oder auch eine Oberflächenstruktur des Extrusionsprodukts.

Vorteilhaft kann hierdurch erreicht werden, dass die Qualität des Extrusionsprodukts auch im Hinblick auf seine geometrischen Eigenschaften angepasst werden kann, sofern eine direkte und/oder indirekte systematische Abhängigkeit zwischen einer geometrischen Eigenschaft des Extrusionsprodukts und einer Einstellgröße der Produktionsvorrichtung besteht.

Folglich kann inline eine automatisierte Überprüfung der Qualität eines Extrusionsprodukts im Hinblick auf seine geometrischen Eigenschaften durchgeführt werden und der Bediener kann bei auftretenden Abweichungen in einer geometrischen Eigenschaft des Extrusionsprodukts alarmiert oder benachrichtigt werden, sodass er eine Anpassung an einer Einstellgröße der Produktionsvorrichtung vornehmen kann.

Außerdem kann der Bediener die systematische Abhängigkeit zwischen einer Einstellgröße der Produktionsvorrichtung für das Extrusionsprodukt und einer geometrischen Eigenschaft vorteilhaft dazu nutzen, um eine schnelle und robuste Anpassung der Qualität der Folienbahn hinsichtlich einer geometrischen Eigenschaften des Extrusionsprodukts vorzunehmen.

Somit kann für das hergestellte Extrusionsprodukt ein höheres Maß an Qualität auch im Hinblick auf seine geometrischen Eigenschaften sichergestellt werden und die Menge an Ausschuss in der Herstellung des Extrusionsprodukts kann vorteilhaft reduziert werden.

Weiterhin kann vorteilhaft erreicht werden, dass eine geometrische Eigenschaft des Extrusionsprodukts während der Herstellung dokumentiert werden kann und diese Dokumentation dem Kunden des Extrusionsprodukts zur Verfügung gestellt werden kann. So kann das kundenseitige Vertrauen in das Extrusionsprodukt gestärkt werden.

Ebenfalls kann eine allgemeine Dokumentation der Produkteigenschaften zur Zertifizierung des hergestellten Extrusionsprodukts genutzt werden, wodurch die Wertigkeit des hergestellten Extrusionsprodukts vorteilhaft gesteigert werden kann.

Eine geometrische Eigenschaft eines Extrusionsprodukt kann entsprechend gewünschter Vorgaben vorteilhaft eingehalten werden, sofern eine direkte und/oder indirekte systematische Abhängigkeit zwischen einer Einstellgröße der Produktionsvorrichtung und einer geometrischen Eigenschaft des Extrusionsprodukts vorliegt.

Optional weist die Qualität des Extrusionsprodukts eine optische Eigenschaft auf.

Beispiele einer optischen Eigenschaft eines Extrusionsprodukts sind die Transparenz eines Extrusionsprodukts, die optische Dichte eines Extrusionsprodukts, der Reflexionsgrad eines Extrusionsprodukts oder der Transmissionsgrad eines Extrusionsprodukts.

Vorteilhaft kann hierdurch erreicht werden, dass die Qualität des Extrusionsprodukts auch im Hinblick auf seine optischen Eigenschaften des Extrusionsprodukts angepasst werden kann.

Somit kann für das hergestellte Extrusionsprodukt ein höheres Maß an Qualität auch im Hinblick auf seine optischen Eigenschaften sichergestellt werden und die Menge an Ausschuss in der Herstellung des Extrusionsprodukts kann vorteilhaft reduziert werden.

Weiterhin kann vorteilhaft erreicht werden, dass eine optische Eigenschaft des Extrusionsprodukts während der Herstellung dokumentiert werden kann und diese Dokumentation dem Kunden des Extrusionsprodukts zur Verfügung gestellt werden kann. So kann insgesamt auch das kundenseitige Vertrauen in das Extrusionsprodukt gestärkt werden.

Bevorzugt weist die Qualität des Extrusionsprodukts eine funktionale Eigenschaft auf.

Beispiele einer funktionalen Eigenschaft eines Extrusionsprodukts sind beispielsweise die Wasserdampfdurchlässigkeit einer Folienbahn, die Atmungsaktivität einer Folienbahn, die Barriereeigenschaften einer Folienbahn, die Versteckrate einer Folienbahn oder die Planlage einer Folienbahn.

Vorteilhaft kann hierdurch erreicht werden, dass die Qualität des Extrusionsprodukts auch im Hinblick auf seine funktionalen Eigenschaften des Extrusionsprodukts angepasst werden kann.

Somit kann für das hergestellte Extrusionsprodukt ein höheres Maß an Qualität auch im Hinblick auf seine funktionalen Eigenschaften sichergestellt werden und die Menge an Ausschuss in der Herstellung des Extrusionsprodukts kann vorteilhaft reduziert werden.

Weiterhin kann vorteilhaft erreicht werden, dass eine funktionale Eigenschaft des Extrusionsprodukts während der Herstellung dokumentiert werden kann und diese Dokumentation dem Kunden des Extrusionsprodukts zur Verfügung gestellt werden kann. So kann insgesamt auch das kundenseitige Vertrauen in das Extrusionsprodukt gestärkt werden.

Optional wird die Qualität des Extrusionsprodukts inline angepasst und entspricht der gewünschten Qualität des Extrusionsprodukts, weist also keine messbare Störgröße auf.

Begrifflich sei hierzu Folgendes erläutert:
Eine "Störgröße" ist ein Parameter, der eine Abweichung von seinem Soll-Zustand aufweist.

Hier wird konkret unter anderem vorgeschlagen, dass die Qualität einer Folienbahn inline automatisiert so angepasst wird, dass sie keine messbare Störgröße mehr aufweist. Diese Wunschvorstellung einer Qualitätsanpassung ist insbesondere so zu verstehen, dass gemessene Abweichungen der Qualität unverzüglich und automatisiert angepasst werden bis keine Störgröße mehr messbar ist.

Damit wird die Qualität eines Extrusionsprodukts innerhalb der von der Messgenauigkeit definierten Grenzen der Qualität gesteuert.

Vorteilhaft kann hierdurch erreicht werden, dass Qualitätserfordernisse für ein Extrusionsprodukt automatisiert inline eingehalten werden können.

Damit kann der Ausschuss hergestellter Extrusionsprodukte drastisch reduziert werden.

Vorteilhaft kann ebenfalls erreicht werden, dass ein Bediener der Produktionsvorrichtung zur Herstellung eines Extrusionsprodukts durch die automatisierte Steuerung der Qualitätseigenschaften des Extrusionsprodukts entlastet werden kann. Der Bediener kann seine Aufmerksamkeit demnach verstärkt auf andere Prozesserfordernisse lenken. Folglich kann auch das Ausbildungsniveau der Bediener der Produktionsvorrichtung im Bereich der Qualitätsüberwachung und Qualitätssteuerung reduziert werden.

Bevorzugt wird die gewünschte Qualität des Extrusionsprodukts manuell vorgegeben.

Konkret wird hier unter anderem vorgeschlagen, dass der Bediener einer Produktionsvorrichtung den Fingerabdruck mit allen darin enthaltenen Einstellgrößen für die Produktion eines Extrusionsprodukts manuell vorgeben kann.

In einer besonders geeigneten Ausführung dieses Merkmals kann ein Bediener die gewünschten Qualitätsanforderungen eines Extrusionsprodukts manuell einstellen. Dazu kann er den Fingerabdruck des Extrusionsprodukts verwenden. So kann ebenfalls manuell und zügig auf eine Änderung der gewünschten Qualitätseigenschaften eines Extrusionsprodukts reagiert werden und das Produkt kann einfach auf die Wünsche eines anderen Kunden und/oder eines anderen Einsatzzweckes angepasst werden, zumindest sofern die dazu benötigten Fingerabdrücke vorliegen.

Vorteilhaft kann hierdurch erreicht werden, dass ein Bediener einer Produktionsvorrichtung zur Herstellung eines Extrusionsprodukts die gewünschte Qualität des Extrusionsprodukts schnell, einfach und manuell über den zugehörigen Fingerabdruck an die Erfordernisse der Produktion anpassen kann.

Optional wird die gewünschte Qualität des Extrusionsprodukts automatisch vorgegeben.

So kann in einer geeigneten Ausführungsform zwischen unterschiedlichen herstellbaren Extrusionsprodukten über die jeweils zugehörigen Fingerabdrücke vereinfacht unterschieden werden, welche in der Datenerfassungs- und -auswerteeinheit gespeichert sind und wobei die übergeordnete Produktionssteuerung automatisiert Anpassungen hinsichtlich der gewünschten Qualitätsanforderungen durchführen kann, sodass zwischen den unterschiedlichen auf einer Produktionsvorrichtung herstellbaren Extrusionsprodukten vorteilhaft besonderes schnell umgestellt werden kann.

Ebenfalls wird hier konkret unter anderem vorgeschlagen, dass zwischen zwei Extrusionsprodukten mit unterschiedlichen Anforderungen an die zu erreichenden Ausprägungen der Eigenschaften der einzelnen Extrusionsprodukte während dem laufenden Betrieb umgestellt werden kann. Dazu wird ebenfalls vorgeschlagen, dass auf dem kontinuierlich hergestellten Extrusionsprodukt eine Markierung aufgebracht wird, sobald die Umstellung beginnt, und eine zweite Markierung aufgebracht wird, sobald der Produktwechsel abgeschlossen ist.

Anhand der Markierungen können die einzelnen Extrusionsprodukte von dem Ausschuss getrennt werden.

Vorteilhaft kann so erreicht werden, dass ein einfacher und schneller Produktwechsel zwischen zwei Extrusionsprodukten erfolgen kann, wobei die Produktionsvorrichtung beim Wechsel der Extrusionsprodukte nicht abgefahren oder angefahren werden muss. Insbesondere kann ein Extruder als Komponente einer Produktionsvorrichtung von Extrusionsprodukten auf diese Art und Weise während dem Betrieb gespült werden. Ein Spülvorgang des Extruders ist insbesondere dann notwendig, wenn die Rezeptur geändert wird, was beim Wechsel zwischen zwei Extrusionsprodukten nicht selten der Fall ist. Üblicherweise wird ein Extruder beim Spülen manuell zerlegt und gereinigt. Dieser insbesondere zeitliche Aufwand kann durch das hier vorgeschlagene Verfahren deutlich reduziert werden.

Ebenfalls kann vorteilhaft hierdurch erreicht werden, dass die Wahrscheinlichkeit nicht zueinander passender Qualitätsanforderungsmerkmale reduziert werden kann. So kann sichergestellt werden, dass unterschiedliche Qualitätsanforderungen einer Folienbahn zueinander passend eingestellt sind und den Produktanforderungen entsprechen.

Bevorzugt werden mehr als eine Messgröße als Parameter des Verfahrens mittels eines oder mehrerer Sensoren inline an dem hergestellten Extrusionsprodukt und/oder an der Produktionsvorrichtung bestimmt.

In einer hier vorgeschlagenen Ausführungsform wird eine Eigenschaft des Extrusionsprodukts oder eine Prozessgröße des Produktionsprozesses an unterschiedlichen Positionen im Produktionsprozess mittels eines ersten und eines zweiten Sensors bestimmt. Insbesondere kann hierbei in einem besonders einfachen Fall an die Temperatur des Kunststoffs gedacht werden.

In einer anderen geeigneten Ausführungsform können unterschiedliche Messverfahren an einer Position im Produktionsprozess eingesetzt werden.

Vorteilhaft kann hierdurch erreicht werden, dass durch den Einsatz zusätzlicher Sensoren zusätzliche Parameter der Produktionsvorrichtung und/oder des Produktionsprozesses bestimmt werden, welche für das Ableiten einer systematischen Abhängigkeit genutzt werden können.

Weiterhin kann vorteilhaft erreicht werden, dass Qualitätsanforderungen an unterschiedlichen Stellen im Produktionsprozess überwacht werden können.

Optional wird der Einstellgrößensollwert im Produktionsprozess des Extrusionsprodukts zur Beeinflussung der Qualität des Extrusionsprodukts über einen geeigneten spezifischen Algorithmus bestimmt.

Vorteilhaft kann hierdurch erreicht werden, dass die Anpassung der Qualität eines Extrusionsprodukts automatisiert durch einen geeigneten spezifischen Algorithmus übernommen wird. So kann sichergestellt werden, dass die Anpassung der Qualität eines Extrusionsprodukts automatisiert und hochfrequent erfolgen kann. Weiterhin können in der Anpassung der Qualität eines Extrusionsprodukts Fehler vermieden werden, insbesondere Fehler, die durch menschliches Verhalten bedingt sind. Bei einer hier vorgeschlagenen Anpassung der Qualität eines Extrusionsprodukts können allerhöchstens systematische Fehler auftreten, welche jedoch durch Anpassung des spezifischen Algorithmus behoben werden können.

Bevorzugt wird der Einstellgrößensollwert im Produktionsprozess des Extrusionsprodukts zur Beeinflussung der Qualität des Extrusionsprodukts über einen geeigneten spezifischen Algorithmus bestimmt, wobei der Algorithmus eine inline-Regelabweichung, also die Differenz aus der gewünschten Qualität des Extrusionsprodukts und der ermittelten Qualität des Extrusionsprodukts, als Eingangsgröße verwendet.

Begrifflich sei hierzu Folgendes erläutert:
Unter einer "Regelabweichung" wird die Differenz zwischen dem Sollwert und dem Istwert einer Größe, insbesondere der Qualität des Extrusionsprodukts, verstanden.

In einer geeigneten Ausführungsform kann so ein geschlossener Regelkreis für die Anpassung der Qualität eines Extrusionsprodukts genutzt werden. Durch die Verwendung einer Regelabweichung kann eine Störgröße nach einer Einschwingzeit des zur Regelung der Qualitätsabweichung verwendeten spezifischen Algorithmus zu Null ausgeregelt werden.

Vorteilhaft kann hierdurch erreicht werden, dass ermittelte Störgrößen automatisiert durch einen Regler ausgeregelt werden können. So können höchste Anforderungen an die Produktqualität eingehalten und garantiert werden.

Optional wird der Einstellgrößensollwert im Produktionsprozess des Extrusionsprodukts zur Beeinflussung der Qualität des Extrusionsprodukts mit einem Optimierungsverfahren bestimmt.

Vorteilhaft kann damit erreicht werden, dass ein vorgegebener Einstellgrößensollwert auf abweichende Randbedingungen reagiert, insbesondere kann ein vorgegebener Einstellgrößensollwert auf veränderliche Prozessgrößen des Produktionsprozesses angepasst werden kann.

Bevorzugt wird der Einstellgrößensollwert im Produktionsprozess des Extrusionsprodukts zur Beeinflussung der Qualität des Extrusionsprodukts mit einem selbstlernenden Optimierungsverfahren bestimmt.

So wird hier konkret unter anderem vorgeschlagen, zur Bestimmung eines Einstellgrößensollwerts einen Algorithmus zu verwenden, der die Merkmale eines Algorithmus aus der Klasse des Maschinellen Lernens aufweist. Dadurch ist der Algorithmus in der Lage aus einigen Erfahrungswerten des Bedieners oder mehrerer Bediener oder auf der Basis von Erfahrungswerten eines Bedieners in Kombination mit gemessenen Parametern eine systematische Abhängigkeit zwischen den Parametern abzuleiten.

Vorteilhaft kann hierdurch erreicht werden, dass die komplexen Aufgaben durch den Einsatz von selbstlernenden Optimierungsverfahren nicht aufwändig durch den Menschen an neue Gegebenheiten, beispielsweise in Form von veränderlichen Prozessgrößen des Produktionsprozesses, angepasst werden müssen. Somit kann Zeit und Geld bei der Ableitung systematischer Regelalgorithmen eingespart werden. Insbesondere ist es mit dem hier vorgeschlagenen Vorgehen vorteilhaft möglich eine bestehende systematische Abhängigkeit um eine weitere Einflussgröße zu erweitern. Somit kann das Wissen bestehender Produktionsvorrichtungen einfacher auf komplexere Produktionsvorrichtungen oder Produktionsvorrichtungen mit neuen Einstellgrößen oder Prozessgrößen erweitert werden.

In einer besonders vorteilhaften Ausführung werden der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenverarbeitungs- und -auswerteeinheit und/oder einer Datenbank gespeichert.

Vorteilhaft kann damit erreicht werden, dass die entsprechenden Werte in einer Datenbank vorrätig sind und jederzeit bei Bedarf abgerufen werden können. Insbesondere kann so vorteilhaft sichergestellt werden, dass Verfahren, die einen dieser Parameter verwenden, diese direkt in einer Datenverarbeitungs- und -auswerteeinheit und/oder einer Datenbank abrufen können, wodurch die Werte für diese Verfahren auf einem einfachen Weg direkt nutzbar gemacht werden können.

Weiterhin ergibt sich so vorteilhaft, dass die Werte, sofern sie in einer Datenverarbeitungs- und -auswerteeinheit und/oder einer Datenbank gespeichert sind einfach angepasst werden können.

Bevorzugt werden der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert, wobei eine bereits bestehende Datenbank fortlaufend erweitert wird.

Vorteilhaft kann damit erreicht werden, dass auch die Historie dieser Daten in einer fortlaufend erweiterten Datenbank gespeichert werden kann. Diese Historie kann einerseits für Maßnahmen der Dokumentation, insbesondere auch der Dokumentation der Qualität eines Extrusionsprodukts, eingesetzt werden und andererseits kann die Historie verwendet werden um aus den Daten Lernprozesse zu ermöglichen. Diese Lernprozesse können einerseits durch eine Analyse eines Bedieners oder eines Anlagenherstellers und andererseits durch die Analyse eines selbstlernenden Algorithmus gestaltet werden.

In einer vorteilhaften Ausgestaltung der Erfindung steht durch diesen Aspekt auch eine größere Datenvielfalt zur Verfügung, welche zur Ableitung einer systematischen Abhängigkeit genutzt werden kann. Dadurch lässt sich vorteilhaft erreichen, dass die systematische Abhängigkeit nach dem dritten Aspekt der Erfindung ein besseres Bestimmtheitsmaß erreichen kann.

Es ist unter anderem denkbar, dass sich die systematische Abhängigkeit durch die größere Datenvielfalt auf einen größeren Bereich der Parameter erstrecken lässt, wobei vorteilhaft auch in den Randbereichen ein regional bezogenes besseres Bestimmtheitsmaß der systematischen Abhängigkeit erreicht wird.

Weiterhin kann dies vorteilhaft dazu führen, dass das Bestimmtheitsmaß der Daten fortlaufend verbessert werden kann und/oder weitere Abhängigkeiten, insbesondere schwach korrelierende Abhängigkeiten zwischen Parametern, sicher identifiziert und beschrieben werden können.

Optional werden der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert, wobei die Datenbank nur Daten einer spezifischen Produktionsvorrichtung zum Produzieren von einem Extrusionsprodukt beinhaltet.

So wird hier unter anderem vorgeschlagen nur Daten von einer spezifischen Produktionsvorrichtung und keine Daten von unterschiedlichen Produktionsvorrichtungen und/oder Daten von unter anderen Randbedingungen betriebenen Produktionsvorrichtungen für Extrusionsprodukte zu verwenden.

Vorteilhaft kann hierdurch erreicht werden, dass die erhobenen Daten, welche unter anderem für die Ableitung einer systematischen Abhängigkeit nach dem dritten Aspekt der Erfindung eingesetzt werden, nicht verunreinigt und/oder verwässert und/oder verwischt und/oder verschmiert werden. Mit anderen Worten kann so vorteilhaft sichergestellt werden, dass die erhobenen Daten konsistent und/oder stimmig sind. Damit kann vorteilhaft erreicht werden, dass ein optimales Bestimmtheitsmaß und/oder eine optimale Korrelation zwischen den Parametern in den Daten bewirkt werden kann.

Bevorzugt werden der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert, wobei die Datenbank Daten von einer Vielzahl von Produktionsvorrichtungen zum Produzieren von einem Extrusionsprodukt identischer Gattung beinhaltet.

Vorteilhaft kann hierdurch erreicht werden, dass die zur Auswertung und zur Ableitung einer systematischen Abhängigkeit nach dem dritten Aspekt der Erfindung zur Verfügung stehenden Daten schnell verdichtet werden können, wobei nur Daten von Produktionsvorrichtungen identischer Gattung berücksichtigt werden, damit gattungsbedingte Abhängigkeiten ausgeschlossen werden können.

Optional werden der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert, wobei die Datenbank Daten von einer Vielzahl von Produktionsvorrichtungen zum Produzieren von einem Extrusionsprodukt abweichender Gattung beinhaltet.

Vorteilhaft kann hierdurch erreicht werden, dass die zur Auswertung und zur Ableitung einer systematischen Abhängigkeit nach dem dritten Aspekt der Erfindung zur Verfügung stehenden Daten schnell vervielfacht und/oder verdichtet werden können.

Bevorzugt werden der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert, wobei die Datenbank die Daten von Produktionsvorrichtungen zum Produzieren von einem Extrusionsprodukt eines Produzenten und/oder vieler Produzenten beinhaltet.

Vorteilhaft kann hierdurch erreicht werden, dass die zur Auswertung und zur Ableitung einer systematischen Abhängigkeit nach dem dritten Aspekt der Erfindung zur Verfügung stehenden Daten schnell vervielfacht und/oder verdichtet werden können, wobei dabei wahlweise nur die Daten eines Produzenten von einem Extrusionsprodukt oder die Daten mehrerer Produzenten von einem Extrusionsprodukt Berücksichtigung finden können. Ebenfalls lässt sich vorteilhaft erreichen, dass auf diese Weise die Erfahrungswerte einer Vielzahl von Bedienern auch unterschiedlicher Produzenten und/oder Fingerabdrücke unterschiedlicher Produktionsprozesse an unterschiedlichen Orten agglomerieren lassen, wodurch auch das maschinelle Lernen nach dem dritten und/oder vierten Aspekt der Erfindung unterstützt wird.

Optional werden der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert, wobei die Datenbank die Daten mit einem standortunabhängiger Speicher synchronisiert.

Begrifflich sei hierzu Folgendes erläutert:
Ein "standortunabhängiger Speicher" ist ein Datenspeicher, der nicht von einem Standort abhängig ist oder in irgendeiner Weise an einen Standort gebunden ist. Vielmehr ist unter einem standortunabhängigen Speicher ein Speicher zu verstehen, welcher nicht ortsgebunden ist, insbesondere ist er nicht an eine Maschine oder eine Anlage oder einen Herstellungsprozess oder eine Produktionshalle oder ein Unternehmen oder ein Staatsgebiet oder eine Wertschöpfungskette gebunden.

Vorteilhaft kann hierdurch erreicht werden, dass die zur Auswertung und zur Ableitung einer systematischen Abhängigkeit nach dem dritten Aspekt der Erfindung zur Verfügung stehenden Daten schnell vervielfacht und/oder verdichtet werden können, wobei dabei die Möglichkeiten der Informationstechnik Daten über einen standortunabhängigen Speicher zu synchronisieren Verwendung finden.

Somit kann ein Aufwand zum Synchronisieren der Daten reduziert werden.

Es sei ausdrücklich darauf hingewiesen, dass der Gegenstand des vierten Aspekts mit dem Gegenstand der vorstehenden Aspekte der Erfindung vorteilhaft kombinierbar ist, und zwar sowohl einzeln oder in beliebiger Kombination kumulativ.

Nach einem fünften Aspekt der Erfindung löst die Aufgabe ein Verfahren zum Anfahren eines Produktionsprozesses eines Extrusionsprodukts mit einer Produktionsvorrichtung, wobei der Einstellgrößensollwert entsprechend einem Verlauf von vorbestimmten Einstellgrößensollwerten in Abhängigkeit eines Produktionsprozessverlaufsparameters vorgegeben wird.

Im stationären oder quasistationären Betrieb einer Produktionsvorrichtung für Extrusionsprodukte weisen die Prozessgrößen einer Produktionsvorrichtung im Abgleich zu einem Zustand in dem die Produktionsvorrichtung etwa einen Tag lang nicht verwendet wurde, sehr unterschiedliche Werte auf. Als Beispiel sei hier erläutert, dass die Temperatur einer Komponente der Produktionsvorrichtung, insbesondere die Temperatur des Zylinders des Extruders, im Betrieb der Produktionsvorrichtung deutlich oberhalb des Wertes angesiedelt ist, der nach einem vollständigen Auskühlen der Produktionsvorrichtung vorherrscht, insbesondere ist dies die Raumtemperatur.

Wesentlicher Aspekt ist hierbei nicht der Zeitraum in dem sich die Prozessgrößen der Produktionsvorrichtung ändern, sondern die Tatsache, dass bei einer Inbetriebnahme einer Produktionsvorrichtung ein Anfahrvorgang durchlaufen wird, bei dem sich unter anderem auch die Prozessgrößen der Produktionsvorrichtung und/oder des Produktionsprozesses verändern.

Diese Veränderung der Prozessgrößen hat Auswirkungen auf die Produktion des Extrusionsprodukts. Unter anderem kann sich mit der Änderung einer Prozessgröße auch eine Eigenschaft des Extrusionsprodukts ändern.

Damit diese durch die Änderung einer oder mehrerer Prozessgrößen hervorgerufenen Auswirkungen so klein wie möglich gehalten werden können, werden Anpassungen an der Produktionsvorrichtung vorgenommen, insbesondere passt der Bediener einer Produktionsvorrichtung für Extrusionsprodukte eine oder mehrere Einstellgrößen der Produktionsvorrichtung und/oder eine oder mehrere beeinflussbare Prozessgrößen der Produktionsvorrichtung oder des Produktionsprozesses an.

Auch beim Abfahrvorgang der Produktionsvorrichtung kommt es zu Änderungen einer Prozessgröße gegenüber dem Wert während dem stationären oder quasistationären Produktionsbetrieb der Produktionsvorrichtung. Auch beim Abfahrvorgang der Produktionsvorrichtung müssen folglich Anpassungen an einer oder mehreren Einstellgrößen der Produktionsvorrichtung und/oder einer oder mehrerer beeinflussbarer Prozessgrößen der Produktionsvorrichtung oder des Produktionsprozesses vorgenommen werden, damit eine Eigenschaft des Extrusionsprodukt optimaler Weise nicht oder nur geringfügig beeinträchtigt wird.

Ebenfalls betroffen von Änderungen einer Prozessgröße ist der Wechsel von einem ersten Extrusionsprodukt auf ein zweites Extrusionsprodukt, sodass auch hier Änderungen einer oder mehrerer Einstellgrößen der Produktionsvorrichtung und/oder einer oder mehrerer beeinflussbarer Prozessgrößen der Produktionsvorrichtung oder des Produktionsprozesses notwendig sind.

Der Stand der Technik sah bislang vor, dass der Bediener einer Produktionsvorrichtung diese Anpassungen in Folge der sich beim Anfahrvorgang oder Abfahrvorgang oder beim Produktwechsel ändernden Prozessgröße manuell sowie entsprechend seiner individuellen Erfahrungen mit der Produktionsvorrichtung vorgenommen hat. Dabei ist wegen der stetigen Änderung einer Prozessgröße bis zum stationären oder quasistationären Produktionsbetrieb oder bis zum Stillstand der Produktionsvorrichtung auch eine fortwährende Anpassung einer Einstellgröße und/oder einer beeinflussbaren Prozessgröße zur Erreichung optimaler Eigenschaften des Extrusionsprodukts notwendig.

Abweichend wird hier vorgeschlagen, dass ein Bediener die Sollwerte der vorhandenen Einstellgrößen und/oder die Sollwerte der beeinflussbaren Prozessgrößen, insbesondere in Form eines Fingerabdrucks nach dem ersten und/oder dem zweiten Aspekt der Erfindung, speichern kann.

Insbesondere wird hier vorgeschlagen, dass bei einer Anpassung auch nur der Sollwert einer Einstellgröße oder der Sollwert einer beeinflussbaren Prozessgröße angepasst wird, die dann entsprechend vom Bediener gespeichert werden kann.

Dabei wird hier konkret unter anderem vorgeschlagen, dass der Bediener das entsprechende Speichern beim Anfahrvorgang, beim Produktwechsel und/oder beim Abfahrvorgang in diskreten Schritten durchführt, wobei diese diskreten Schritte in Abhängigkeit eines Produktionsprozessverlaufsparameters gespeichert werden.

Betrachtet man dieses Vorgehen aus der Sicht einer Ablaufbeschreibung, so kann mit anderen Worten auch gesagt werden, dass das Abspeichern der Sollwerte der vorhandenen Einstellgrößen und/oder die Sollwerte der beeinflussbaren Prozessgrößen, insbesondere in Form eines Fingerabdrucks nach dem ersten und/oder dem zweiten Aspekt der Erfindung, in Abhängigkeit eines Produktionsprozessverlaufsparameters einem Teach-in von markanten Wegpunkten auf einem Weg von einer stillstehenden Produktionsvorrichtung bis zum stationären oder quasistationären Betrieb der Produktionsvorrichtung oder auf dem Weg von einem ersten Extrusionsprodukt bis zu einer stationären oder quasistationären Produktion eines zweiten Extrusionsprodukts oder auf dem Weg von einem stationären oder quasistationären Betrieb der Produktionsvorrichtung bis zu einer stillstehenden Produktionsvorrichtung darstellt.

Es wird unter anderem vorgeschlagen, dass die Wegpunkte in Abhängigkeit eines Produktionsprozessverlaufsparameters dieser unterschiedlichen Vorgänge, insbesondere ein Anfahrvorgang, ein Abfahrvorgang oder ein Produktwechsel, für unterschiedliche Extrusionsprodukte und auch unterschiedliche nicht beeinflussbare Werte von Prozessgrößen nebeneinander gespeichert und verwaltet werden können.

Ebenfalls wird hier unter anderem vorgeschlagen, dass ein Bediener einen aus Wegpunkten bestehenden Weg über eine automatisierte Aufnahmefunktion aufzeichnen kann. So ist beispielsweise denkbar, dass ein Bediener vor dem Beginn eines Anfahrvorganges oder eines Produktwechsels oder eines Abfahrvorgangs eine Aufnahmefunktion auslöst, welche die von ihm durchgeführten Änderungen in Form von Wegpunkten in Abhängigkeit eines Produktionsprozessverlaufsparameters aufzeichnet. Mit anderen Worten ist es so möglich die Erfahrung eines erfahrenen Mitarbeiters aufzuzeichnen.

Konkret wird hier unter anderem auch vorgeschlagen, dass auch Wege für andere hier bislang noch nicht genannte Situationen, in denen ein Bediener eine Prozedur aus Änderungen vornimmt, insbesondere sei hier auch an Problemsituationen gedacht, aufgezeichnet, verwaltet und diese später von beliebigen Bedienern genutzt werden können.

Auf Basis dieser durch Wegpunkte erlernten Wege aus Änderungen in den beeinflussbaren Größen der Produktionsvorrichtung und/oder des Produktionsprozesses in Abhängigkeit eines Produktionsprozessverlaufsparameters wird hier konkret unter anderem vorgeschlagen, dass die erlernten Wege für erneute Anfahrvorgänge und/oder Abfahrvorgänge und/oder Produktwechsel verwendet werden können, sodass der Bediener entweder manuell von einer Änderung zur nächsten Änderung geführt wird, oder die Änderungen automatisiert von der Produktionsvorrichtung nach einem Startsignal durch den Bediener abgefahren werden.

Dabei kann der Bediener kontextsensitiv von einem Schritt zum nächsten geführt werden.

So kann hierdurch unter anderem vorteilhaft erreicht werden, dass diese unterschiedlichen durch Wegpunkte beschriebenen Wege zum Anfahren oder Abfahren einer Produktionsvorrichtung oder zum Produktwechsel verwaltet, geladen und verwendet werden können.

Insbesondere ist so konkret unter anderem auch vorteilhaft denkbar, dass auch ein unerfahrener Bediener eine Produktionsvorrichtung mit den gespeicherten Wegen betreiben kann, wobei die Wege insbesondere von einem erfahrenen Bediener aufgezeichnet wurden.

Vorteilhaft kann damit erreicht werden, dass ein Bediener einer Produktionsvorrichtung eine Hilfestellung und/oder eine Arbeitserleichterung erfährt, indem er in der Lage ist die gespeicherten Wege situationsabhängig automatisiert oder manuell zu nutzen. Dadurch kann vorteilhaft erreicht werden, dass die Zyklen zwischen zwei Extrusionsprodukten verkürzt werden können, insgesamt eine Steigerung der Produktivität sowie eine Reduzierung des Ausschusses erreicht werden kann.

Ebenfalls kann vorteilhaft erreicht werden, dass die Leistung und/oder die Erfahrung des besten und/oder erfahrensten Bedieners stets verfügbar gemacht wird und seine Vorgehensweise von anderen Bedienern kopiert und/oder genutzt werden kann.

Durch die diskreten Wegpunkte kann vorteilhaft erreicht werden, dass ein Weg in Teilschritte zerlegt werden kann, welches eine deutliche Verbesserung gegenüber einem Verfahren mit kontinuierlichen Änderungen einzelner Einstellgrößen darstellt.

Weiterhin kann vorteilhaft erreicht werden, dass ein Produktwechsel automatisch oder teilautomatisch durchgeführt werden kann.

Anhand der gespeicherten Wege, insbesondere der Wege zum Anfahren einer Produktionsvorrichtung, kann der energetisch beste Weg ausgewählt werden, sodass Betriebskosten der Produktionsvorrichtung eingespart werden können und damit die Herstellkosten des Extrusionsprodukts gesenkt werden können.

Weiter wird vorgeschlagen, dass anhand der gespeicherten Wege eine Energieberatung durch den Hersteller der Produktionsvorrichtung oder einen Dienstleister angeboten werden kann, wodurch ebenfalls die Produktionskosten eines Extrusionsprodukts gesenkt werden können.

Bevorzugt wird ein Einstellgrößensollwert mit einem Verfahren nach dem vierten Aspekt der Erfindung vorbestimmt.

Es versteht sich, dass sich die Vorteile eines Verfahrens zum Anpassen der Qualität eines mit einer Produktionsvorrichtung hergestellten Extrusionsprodukts, wobei die Qualität inline bestimmt und angepasst wird, nach einem vierten Aspekt der Erfindung, wie vorstehend beschrieben unmittelbar auf ein Verfahren zum Anfahren eines Produktionsprozesses eines Extrusionsprodukts mit einer Produktionsvorrichtung, wobei der Einstellgrößensollwert entsprechend einem Verlauf von vorbestimmten Einstellgrößensollwerten in Abhängigkeit eines Produktionsprozessverlaufsparameters vorgegeben wird, erstrecken.

Es sei ausdrücklich darauf hingewiesen, dass der Gegenstand des fünften Aspekts mit dem Gegenstand der vorstehenden Aspekte der Erfindung vorteilhaft kombinierbar ist, und zwar sowohl einzeln oder in beliebiger Kombination kumulativ.

Nach einem sechsten Aspekt der Erfindung löst die Aufgabe ein Verfahren zum Herstellen eines Extrusionsprodukts, wobei ein Extruder zum Plastifizieren eines thermoplastischen Kunststoffs betrieben wird, wobei während des Herstellens ein Verfahren nach dem ersten und/oder zweiten und/oder dritten und/oder vierten und/oder fünften Aspekt der Erfindung durchgeführt wird.

Es versteht sich, dass sich die Vorteile eines Verfahrens zum Überwachen eines Produktionsprozesses eines Extrusionsprodukts mit einer Produktionsvorrichtung nach dem ersten und/oder zweiten Aspekt der Erfindung und/oder die Vorteile eines Verfahrens zum indirekten Ableiten einer systematischen Abhängigkeit bei einem Produktionsprozess eines Extrusionsprodukts nach dem dritten Aspekt der Erfindung und/oder die Vorteile eines Verfahrens zum Anpassen der Qualität eines mit einer Produktionsvorrichtung hergestellten Extrusionsprodukts nach dem vierten Aspekt der Erfindung und/oder die Vorteile eines Verfahrens zum Anfahren eines Produktionsprozesses eines Extrusionsprodukts mit einer Produktionsvorrichtung nach dem fünften Aspekt der Erfindung, wie vorstehend beschrieben unmittelbar auf ein Verfahren zum Herstellen eines Extrusionsprodukts, wobei ein Extruder zum Plastifizieren eines thermoplastischen Kunststoffs betrieben wird, wobei während des Herstellens ein Verfahren nach dem ersten und/oder zweiten und/oder dritten und/oder vierten und/oder fünften Aspekt der Erfindung durchgeführt wird, erstrecken.

Es sei ausdrücklich darauf hingewiesen, dass der Gegenstand des sechsten Aspekts mit dem Gegenstand der vorstehenden Aspekte der Erfindung vorteilhaft kombinierbar ist, und zwar sowohl einzeln oder in beliebiger Kombination kumulativ.

Nach einem siebten Aspekt der Erfindung löst die Aufgabe eine Anlage zum Herstellen eines Extrusionsprodukts, wobei die Anlage einen Extruder zum Plastifizieren eines thermoplastischen Kunststoffs und eine Düse zum Austreten des Kunststoffs aufweist, wobei die Anlage eine Datenverarbeitungs- und -auswerteeinheit aufweist, wobei die Datenverarbeitungs- und -auswerteeinheit eine Programmierung aufweist, wobei die Programmierung zum Ausführen eines Verfahrens nach Verfahren nach dem ersten und/oder zweiten und/oder dritten und/oder vierten und/oder fünften und/oder sechsten Aspekt der Erfindung eingerichtet ist.

Es versteht sich, dass sich die Vorteile eines Verfahrens zum Überwachen eines Produktionsprozesses eines Extrusionsprodukts mit einer Produktionsvorrichtung nach dem ersten und/oder zweiten Aspekt der Erfindung und/oder die Vorteile eines Verfahrens zum indirekten Ableiten einer systematischen Abhängigkeit bei einem Produktionsprozess eines Extrusionsprodukts nach dem dritten Aspekt der Erfindung und/oder die Vorteile eines Verfahrens zum Anpassen der Qualität eines mit einer Produktionsvorrichtung hergestellten Extrusionsprodukts nach dem vierten Aspekt der Erfindung und/oder die Vorteile eines Verfahrens zum Anfahren eines Produktionsprozesses eines Extrusionsprodukts mit einer Produktionsvorrichtung nach dem fünften Aspekt der Erfindung und/oder die Vorteile eines Verfahrens zum Herstellen eines Extrusionsprodukts nach dem sechsten Aspekt der Erfindung, wie vorstehend beschrieben unmittelbar auf ein Verfahren zum Herstellen eines Extrusionsprodukts, wobei ein Extruder zum Plastifizieren eines thermoplastischen Kunststoffs betrieben wird, wobei während des Herstellens ein Verfahren nach dem ersten und/oder zweiten und/oder dritten und/oder vierten und/oder fünften und/oder sechsten Aspekt der Erfindung durchgeführt wird, erstrecken.

Bevorzugt weist die Anlage ein Einstellgrößenmesssystem zum Bestimmen einer Einstellgröße des Produktionsprozesses auf.

Begrifflich sei hierzu Folgendes erläutert:
Ein "Messsystem" ist ein System zur Erfassung einer Messgröße. Der Ausgabewert des Messsystems ist ein Messwert.

Ein "Einstellgrößenmesssystem" bestimmt zahlenmäßig den Wert einer Einstellgröße.

Vorteilhaft kann damit erreicht werden, dass die Istwerte einer Einstellgröße zeitgenau und ohne Zeitversatz bestimmt werden kann und für ein Verfahren nach einem der vorstehenden Aspekt der Erfindung genutzt werden kann.

So kann vorteilhaft erreicht werden, dass der Bediener einer Produktionsvorrichtung die Istwerte einer Einstellgröße nicht manuell ablesen und in die Datenverarbeitungs- und -auswerteeinheit eingeben muss.

Insbesondere kann hierdurch die Genauigkeit mit der ein Istwert einer Einstellgröße bestimmt wird vorteilhaft erhöht werden.

Optional weist die Anlage ein Messgrößenmesssystem zum Bestimmen einer Messgröße des Produktionsprozesses, insbesondere einer Prozessgröße, auf.

Begrifflich sei hierzu Folgendes erläutert:
Ein "Messgrößenmesssystem" bestimmt zahlenmäßig den Wert einer Messgröße.

Vorteilhaft kann damit erreicht werden, dass die Istwerte einer Prozessgröße zeitgenau und ohne Zeitversatz bestimmt werden kann und für ein Verfahren nach einem der vorstehenden Aspekt der Erfindung genutzt werden kann.

So kann vorteilhaft erreicht werden, dass der Bediener einer Produktionsvorrichtung die Istwerte einer Prozessgröße nicht manuell ablesen und in die Datenverarbeitungs- und -auswerteeinheit eingeben muss.

Insbesondere kann hierdurch die Genauigkeit mit der ein Istwert einer Prozessgröße bestimmt wird vorteilhaft erhöht werden.

Bevorzugt weist die Anlage ein Eigenschaftsmesssystem zum inline-Bestimmen einer Ausprägung einer Eigenschaft des Extrusionsprodukts auf.

Begrifflich sei hierzu Folgendes erläutert:
Ein "Eigenschaftsmesssystem" bestimmt zahlenmäßig den Wert oder die Ausprägung einer Eigenschaft, also den "Eigenschaftswert". Ein "Eigenschaftssollwert" ist der Vorgabewert für eine Eigenschaft.

Unter "inline" wird verstanden, dass eine Ausprägung einer Eigenschaft des Extrusionsprodukts während des laufenden Produktionsprozesses des Extrusionsprodukts bestimmt wird. Beispielsweise kann eine Ausprägung einer Eigenschaft des Extrusionsprodukts inline bestimmt werden, indem ein Sensor eine Ausprägung einer Eigenschaft anhand des den Sensor passierenden Materialstroms des Extrusionsprodukts bestimmt.

Vorteilhaft kann damit erreicht werden, dass eine Ausprägung einer Eigenschaft des Extrusionsprodukts zeitgenau und ohne Zeitversatz bestimmt werden kann und für ein Verfahren nach einem der vorstehenden Aspekte der Erfindung genutzt werden kann.

So kann vorteilhaft erreicht werden, dass der Bediener einer Produktionsvorrichtung die Ausprägung einer Eigenschaft des Extrusionsprodukts nicht manuell erfassen und in die Datenverarbeitungs- und -auswerteeinheit eingeben muss.

Insbesondere kann hierdurch die Genauigkeit mit der eine Ausprägung einer Eigenschaft des Extrusionsprodukts bestimmt wird vorteilhaft erhöht werden.

In einer besonders bevorzugten Ausführungsform weist die Anlage ein Stellglied zum inline-Beeinflussen der Qualität des Extrusionsprodukts mit segmentierten Stellzonen auf.

Vorteilhaft kann damit erreicht werden, dass eine Einstellung eines Sollwertes einer Einstellgröße segmentweise erfolgen kann, wodurch die Eigenschaften des Extrusionsprodukts verbessert werden können.

Es sei ausdrücklich darauf hingewiesen, dass der Gegenstand des siebten Aspekts mit dem Gegenstand der vorstehenden Aspekte der Erfindung vorteilhaft kombinierbar ist, und zwar sowohl einzeln oder in beliebiger Kombination kumulativ.

In diesem Zusammenhang sei ausdrücklich betont, dass sich die "Aspekte der Erfindung" miteinander so zu kombinieren verstehen, dass jegliche Ausgestaltung eines Aspekts der Erfindung mit jeglicher Ausgestaltung eines oder mehrerer Aspekte der Erfindung gemeinsam verwirklichen lassen, insofern nicht im Einzelfall zwei Merkmale in Widerspruch zueinander stehen. Es seien also die Kumulationen der Merkmale zweier (oder jeglicher mehrerer) Aspekte der Erfindung als mit offenbart zu verstehen.

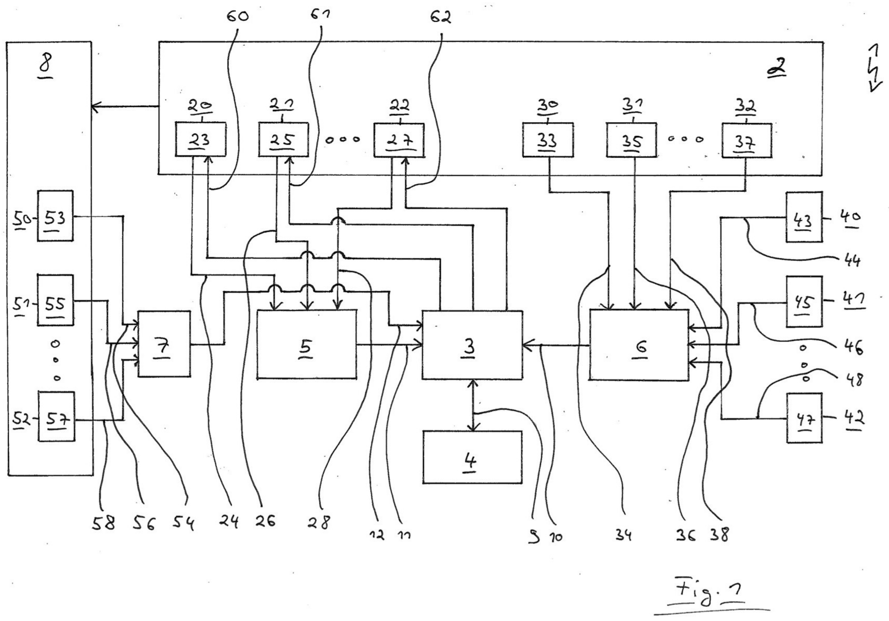

Nachstehend wird die Erfindung anhand eines Ausführungsbeispiels unter Bezugnahme auf die Zeichnung näher erläutert. Dort zeigt
- Fig. 1: in schematischer Ansicht eine Anlage zum Produzieren eines Extrusionsprodukts.

Die Anlage 1 in Figur 1 zum Herstellen eines Extrusionsprodukts 8 besteht neben anderen Komponenten (nicht dargestellt) aus einer Produktionsvorrichtung 2, einer Datenerfassungs- und -auswerteeinheit 3, einer Datenbank 4, einem Einstellgrößenmesssystem 5, einem Prozessgrößenmesssystem 6 und einem Eigenschaftsmesssystem 7.

Die Datenerfassungs- und -auswerteeinheit 3 ist über die Datenverbindung 9 zum Datenaustausch mit der Datenbank 4 verbunden.

Ferner ist die Datenverarbeitung- und -auswerteeinheit 3 über die Datenverbindung 10 zum Datenaustausch mit dem Prozessgrößenmesssystem 6, über die Datenverbindung 11 zum Datenaustausch mit dem Einstellgrößenmesssystem 5 und über die Datenverbindung 12 zum Datenaustausch mit dem Eigenschaftsmesssystem 7 verbunden.

Die Datenerfassungs- und -auswerteeinheit 3 ist zum Ausführen eines Verfahrens dem ersten, dem zweiten, dem dritten, dem vierten, dem fünften und dem sechsten Aspekt der Erfindung eingerichtet.

Die Produktionsvorrichtung 2 weist die Einstellgrößen 20, 21, 22 und die Prozessgrößen 30, 31, 32 auf. Es sei an dieser Stelle ausdrücklich darauf hingewiesen, dass die Produktionsvorrichtung 2 auch mehr oder weniger als die angegebenen Einstellgrößen 20, 21, 22 und auch mehr oder weniger als die angegebenen Prozessgrößen 30, 31, 32 aufweisen kann. Die hier gewählte Anzahl der Einstellgrößen 20, 21, 22 und Prozessgrößen 30, 31, 32 ist im Sinne eines schematischen Beispiels zu verstehen.

Für die Herstellung des Extrusionsprodukts 8 mit der Anlage 1 sind überdies noch die weiteren Prozessgrößen 40, 41, 42 relevant, deren Anzahl ebenfalls im Sinne eines schematischen Beispiels zu verstehen ist. Die weiteren Prozessgrößen 40, 41, 42 herrschen im Umfeld der Produktionsvorrichtung 2 vor. Beispielhaft können dies die Lufttemperatur 40, die Luftfeuchtigkeit 41 und der Luftdruck 42 sein. Es versteht sich, dass die hier ausgewählte Anzahl von Prozessgrößen 40, 41, 42 im Umfeld der Produktionsvorrichtung 2 im Sinne eines schematischen Beispiels zu verstehen ist.

Das Extrusionsprodukt 8 weist die Eigenschaften 50, 51,52 auf, wobei auch hier ausdrücklich darauf hingewiesen ist, dass die Anzahl der Eigenschaften 50, 51,52 im Sinne eines schematischen Beispiels zu verstehen ist.

Die Ausprägung der Eigenschaft 50 wird mit dem Eigenschaftssensor 53 bestimmt, der zum Datenaustausch über die Datenverbindung 54 mit dem Eigenschaftsmesssystem 7 verbunden ist.

Die Ausprägung der Eigenschaft 51 wird mit dem Eigenschaftssensor 55 bestimmt, der zum Datenaustausch über die Datenverbindung 56 mit dem Eigenschaftsmesssystem 7 verbunden ist.

Die Ausprägung der Eigenschaft 52 wird mit dem Eigenschaftssensor 57 bestimmt, der zum Datenaustausch über die Datenverbindung 58 mit dem Eigenschaftsmesssystem 7 verbunden ist.

Das Eigenschaftsmesssystem 7 steuert bei Bedarf die Eigenschaftssensoren 53, 55, 57, beliefert sie bei Bedarf mit Energie, digitalisiert bei Bedarf die über die Datenverbindungen 54, 56, 58 ankommenden Daten, bestimmt die Ausprägung der Eigenschaften 50, 51, 52 zu einem festen Zeitpunkt, der von der Datenerfassungs- und -auswerteeinheit 3 vorgegeben wird und leitet diese Daten über die Datenverbindung 12 an die Datenerfassungs- und -auswerteeinheit 3 weiter.

Der Istwert der Einstellgröße 20 wird mit dem wahlweise kombinierten Einstellgrößensensor und Einstellgrößengeber 23 bestimmt, der zum Datenaustausch über die Datenverbindung 24 mit dem Einstellgrößenmesssystem 5 verbunden ist.

Der Istwert der Einstellgröße 21 wird mit dem wahlweise kombinierten Einstellgrößensensor und Einstellgrößengeber 25 bestimmt, der zum Datenaustausch über die Datenverbindung 26 mit dem Einstellgrößenmesssystem 5 verbunden ist.

Der Istwert der Einstellgröße 22 wird mit dem wahlweise kombinierten Einstellgrößensensor und Einstellgrößengeber 27 bestimmt, der zum Datenaustausch über die Datenverbindung 28 mit dem Einstellgrößenmesssystem 5 verbunden ist.

Das Einstellgrößenmesssystem 5 steuert bei Bedarf die wahlweise kombinierten Einstellgrößensensoren und Einstellgrößengeber 23, 25, 27, beliefert sie bei Bedarf mit Energie, digitalisiert bei Bedarf die über die Datenverbindungen 24, 26, 28 ankommenden Daten, bestimmt die Istwerte der Eigenschaften 20, 21, 22 zu einem festen Zeitpunkt, der von der Datenerfassungs- und -auswerteeinheit 3 vorgegeben wird und leitet diese Daten über die Datenverbindung 11 an die Datenerfassungs- und -auswerteeinheit 3 weiter.

Der Istwert der Prozessgröße 30 wird mit dem Prozessgrößensensor 33 bestimmt, der zum Datenaustausch über die Datenverbindung 34 mit dem Prozessgrößenmesssystem 6 verbunden ist.

Der Istwert der Prozessgröße 31 wird mit dem Prozessgrößensensor 35 bestimmt, der zum Datenaustausch über die Datenverbindung 36 mit dem Prozessgrößenmesssystem 6 verbunden ist.

Der Istwert der Prozessgröße 32 wird mit dem Prozessgrößensensor 37 bestimmt, der zum Datenaustausch über die Datenverbindung 38 mit dem Prozessgrößenmesssystem 6 verbunden ist.

Der Istwert der Prozessgröße 40 wird mit dem Prozessgrößensensor 43 bestimmt, der zum Datenaustausch über die Datenverbindung 44 mit dem Prozessgrößenmesssystem 6 verbunden ist.

Der Istwert der Prozessgröße 41 wird mit dem Prozessgrößensensor 45 bestimmt, der zum Datenaustausch über die Datenverbindung 46 mit dem Prozessgrößenmesssystem 6 verbunden ist.

Der Istwert der Prozessgröße 42 wird mit dem Prozessgrößensensor 47 bestimmt, der zum Datenaustausch über die Datenverbindung 48 mit dem Prozessgrößenmesssystem 6 verbunden ist.

Das Prozessgrößenmesssystem 6 steuert bei Bedarf die Prozessgrößensensoren 33, 35, 37, 43, 45, 47, beliefert sie bei Bedarf mit Energie, digitalisiert bei Bedarf die über die Datenverbindungen 34, 36, 38, 44, 46, 48 ankommenden Daten, bestimmt die Istwerte der Prozessgrößen 30, 31, 32, 40, 41, 42 zu einem festen Zeitpunkt, der von der Datenerfassungs- und -auswerteeinheit 3 vorgegeben wird und leitet diese Daten über die Datenverbindung 10 an die Datenerfassungs- und -auswerteeinheit 3 weiter.

Neben anderen Aufgaben übernimmt die Datenerfassungs- und -auswerteeinheit 3 die Regelung der Einstellgrößen 20, 21, 22 der Produktionsvorrichtung 2 und damit die Regelung der Herstellung des Extrusionsprodukts 8. Dabei sollen unter den vorgegebenen Prozessgrößen 30, 31, 32, 40, 41, 42, die im Beispiel der Figur 1 nicht direkt beeinflusst werden können, unter anderem die Eigenschaften 50, 51, 52 des Extrusionsprodukts 8 in einer optimalen Art und Weise angepasst werden.

Diese Anpassung der Eigenschaften 50, 51, 52 des Extrusionsprodukts 8 erfolgt durch eine Anpassung der Sollwerte der Einstellgrößen 20, 21, 22 der Produktionsvorrichtung 2 über die wahlweise kombinierten Einstellgrößensensoren und Einstellgrößengeber 23, 25, 27. Dazu sind die wahlweise kombinierten Einstellgrößensensoren und Einstellgrößengeber 23, 25, 27 über die Datenverbindungen 60, 61, 62 mit der Datenerfassungs- und -auswerteeinheit 3 verbunden, die hierzu ein Verfahren nach dem vierten Aspekt der Erfindung ausführt.

Die Erfindung kann weiter durch folgende Aspekte ausgeführt sein:
1. Verfahren zum Überwachen eines Produktionsprozesses eines Extrusionsprodukts mit einer Produktionsvorrichtung, wobei eine Messgröße mittels eines Sensors bestimmt wird, insbesondere eine Prozessgröße des Produktionsprozesses, und ein dabei gewonnener Messwert mit einem vorgegebenen Messgrößensollwert verglichen wird, insbesondere ein dabei gewonnener Prozesswert mit einem vorgegebenen Prozessgrößensollwert, dadurch gekennzeichnet, dass eine Einsteilgröße bestimmt und ein dabei gewonnener Einstellgrößenistwert der Produktionsvorrichtung aus einer Produktion des Extrusionsprodukts mit einem vorgegebenen Einstellgrößensollwert verglichen wird, und eine Abweichung des Einstellgrößenistwertes vom Einstellgrößensollwert und/oder des Messwertes vom Messgrößensollwert jeweils gemeldet wird.
2. Verfahren nach Aspekt 1, dadurch gekennzeichnet, dass der Einstellgrößensollwert und/oder der Messgrößensollwert in Abhängigkeit eines Produktionsprozessverlaufsparameters festgelegt wird.
3. Verfahren zum Überwachen eines Produktionsprozesses eines Extrusionsprodukts mit einer Produktionsvorrichtung, wobei eine Messgröße mittels eines Sensors bestimmt wird, insbesondere eine Prozessgröße des Produktionsprozesses, und ein dabei gewonnener Messwert mit einem vorgegebenen Messgrößensollwert verglichen wird, insbesondere ein dabei gewonnener Prozesswert mit einem vorgegebenen Prozessgrößensollwert, eine Einstellgröße bestimmt und ein dabei gewonnener Einstellgrößenistwert der Produktionsvorrichtung aus einer Produktion des Extrusionsprodukts mit einem vorgegebenen Einstellgrößensollwert verglichen werden kann, wobei eine Abweichung zumindest des Einstellgrößenistwertes vom Einstellgrößensollwert und/oder des Messwertes vom Messgrößensollwert gemeldet wird, insbesondere Verfahren nach Aspekt 1 , dadurch gekennzeichnet, dass der Einstellgrößensollwert und/oder der Messgrößensollwert für einen stationären oder quasistationären Produktionsprozess festgelegt wird, und/oder der Einstellgrößensollwert bzw. der Messgrößensollwert innerhalb des Produktionsprozesses zu einem Zeitpunkt nach einem Anfahren des Produktionsprozesses festgelegt werden.
4. Verfahren nach einem der vorstehenden Aspekte, dadurch gekennzeichnet, dass der Einstellgrößensollwert und/oder ein abweichender Messgrößensollwert in Form von Bereichen vorgegeben werden, insbesondere in Form eines Normalbereichs, eines Warnbereichs und eines Alarmbereichs, wobei bevorzugt der Warnbereich größer ist als der Normalbereich und/oder wobei bevorzugt der Alarmbereich größer ist als der Warnbereich.
5. Verfahren nach einem der vorstehenden Aspekte, dadurch gekennzeichnet, dass die Meldung der Abweichung zumindest des Einstellgrößenistwertes vom Einstellgrößensollwert und/oder des Messwertes vom Messgrößensollwert mit den Bereichen des Einstellgrößensollwertes und/oder des Messgrößensollwertes korrespondiert, wobei ein Normalzustand gemeldet wird, wenn der Einstellgrößenistwert und/oder der Messgrößenistwert im Normalbereich liegen, wobei ein Warnzustand gemeldet wird, wenn der Einstellgrößenistwert und/oder der Messgrößenistwert im Warnbereich und außerhalb des Normalbereiches liegen, wobei ein Alarmzustand gemeldet wird, wenn der Einstellgrößenistwert und/oder der Messgrößenistwert im Alarmbereich und außerhalb des Warnbereiches liegen.
6. Verfahren nach einem der vorstehenden Aspekte, dadurch gekennzeichnet, dass der Einstellgrößensollwert und/oder ein abweichender Messgrößensollwert von einem Bediener der Maschine während dem Produktionsprozess vorgegeben werden.
7. Verfahren nach einem der vorstehenden Aspekte, dadurch gekennzeichnet, dass der Einstellgrößensollwert und/oder ein abweichender Messgrößensollwert von einer Datenverarbeitungs- und -auswerteeinheit vorgegeben werden.
8. Verfahren nach einem der vorstehenden Aspekte, dadurch gekennzeichnet, dass der Einstellgrößensollwert und/oder ein abweichender Messgrößensollwert anhand der Rezeptur des Extrusionsprodukts gewählt werden.
9. Verfahren zum indirekten Ableiten einer systematischen Abhängigkeit bei einem Produktionsprozess eines Extrusionsprodukts zwischen einer Messgröße, insbesondere Prozessgröße, sowie einer Einsteilgröße des Extrusionsprozesses und einer Eigenschaft des Extrusionsprodukts, dadurch gekennzeichnet, dass eine Eigenschaft des Extrusionsprodukts als ein erster Parameter des Verfahrens mittels eines Sensors inline an dem hergestellten Extrusionsprodukt bestimmt wird, und/oder eine Ausprägung einer Eigenschaft des Extrusionsprodukts als ein erster Parameter des Verfahrens bestimmt wird, eine Messgröße, insbesondere die Prozessgröße des Produktionsprozesses, als ein zweiter Parameter des Verfahrens mittels eines Sensors bestimmt wird, ein dritter Parameter des Verfahrens, insbesondere ein Parameter der Produktionsvorrichtung aus der Produktion des Extrusionsprodukts, insbesondere die Einsteilgröße des Produktionsprozesses, bestimmt wird, ein Datenerfassungssystem die ermittelten Parameter bei Bedarf digitalisiert und aufzeichnet, die bestimmten Parameter auf einander Bezug nehmend in einer Datenbank geordnet gespeichert werden, und aus den in der Datenbank gespeicherten Daten systematisch die spezifische Abhängigkeit zwischen den Parametern abgeleitet wird, und zwar mittels einer elektronischen Datenverarbeitungs- und -auswerteeinheit, welche mittels eines Algorithmus auf die Parameter zugreift und daraus die systematische Abhängigkeit ermittelt, wobei das Ableiten mindestens zwei, insbesondere mindestens 100 Datensätze von Parametern umfasst.
10. Verfahren nach Aspekt 9, dadurch gekennzeichnet, dass eine Ausprägung einer Eigenschaft des Extrusionsprodukts inline bestimmt wird.
11. Verfahren nach Aspekt 9 oder 10, dadurch gekennzeichnet, dass eine Ausprägung einer Eigenschaft des Extrusionsprodukts offline bestimmt wird.
12. Verfahren nach einem der Aspekte 9 bis 11, dadurch gekennzeichnet, dass die systematische Abhängigkeit der Parameter in Form einer ein Bestimmtheitsmaß aufweisenden Kurve bestimmt wird.
13. Verfahren nach einem der Aspekte 9 bis 12, dadurch gekennzeichnet, dass die systematische Abhängigkeit der Parameter durch einen Einstellbereich bestimmt wird, der in Abhängigkeit des Normalbereiches und/oder des Warnbereiches und/oder des Alarmbereiches für die Eigenschaft des Extrusionsprodukts steht.
14. Verfahren nach einem der Aspekte 9 bis 13, dadurch gekennzeichnet, dass die systematische Abhängigkeit in Form einer Hüllkurve, die auch als Einhüllende oder Envelope bezeichnet werden kann, bestimmt wird, welche in Abhängigkeit des Normalbereiches und/oder des Warnbereiches und/oder des Alarmbereiches für die Eigenschaft des Extrusionsprodukts steht.
15. Verfahren nach einem der Aspekte 9 bis 14, dadurch gekennzeichnet, dass die systematische Abhängigkeit zwischen den Parametern heuristisch bestimmt wird.
16. Verfahren nach einem der Aspekte 9 bis 15, dadurch gekennzeichnet, dass die systematische Abhängigkeit zwischen den Parametern mathematisch bestimmt wird.
17. Verfahren nach einem der Aspekte 9 bis 16, dadurch gekennzeichnet, dass die systematische Abhängigkeit zwischen den Parametern mit einem Optimierungsverfahren bestimmt wird.
18. Verfahren nach einem der Aspekte 9 bis 1 7, dadurch gekennzeichnet, dass die systematische Abhängigkeit zwischen den Parametern mit einem selbstlernenden Optimierungsverfahren bestimmt wird.
19. Verfahren zum Anpassen der Qualität eines mit einer Produktionsvorrichtung hergestellten Extrusionsprodukts, wobei die Qualität inline bestimmt und angepasst wird, dadurch gekennzeichnet, dass eine Ausprägung einer Eigenschaft des Extrusionsprodukts bestimmt wird, und/oder eine Eigenschaft des Extrusionsprodukts mittels eines Sensors inline an dem hergestellten Extrusionsprodukt bestimmt wird, eine Messgröße, insbesondere Prozessgröße, des Produktionsprozesses mittels eines Sensors bestimmt wird, und ein Einstellgrößensollwert anhand der bestimmten Eigenschaft und der Messgröße, insbesondere der Prozessgröße, inline angepasst wird, wobei das Anpassen der Einstellgröße durch Verstellen eines Stellglieds erfolgt, wobei der Einstellgrößensollwert zur bestimmten Ausprägung der Eigenschaft und zur Messgröße, insbesondere Prozessgröße, durch eine systematische Abhängigkeit beschrieben wird, die mit einem Verfahren nach einem der Aspekte 9 bis 18 bestimmt ist, und durch das Anpassen der Einstellgröße die Qualität des Extrusionsprodukts derart verändert wird, dass eine gewünschte Eigenschaft in ihrer Ausprägung verstärkt und/oder eine ungewünschte Eigenschaft in ihrer Ausprägung reduziert wird.
20. Verfahren nach Aspekt 19, dadurch gekennzeichnet, dass eine Ausprägung einer Eigenschaft des Extrusionsprodukts inline bestimmt wird.
21. Verfahren nach Aspekt 19 oder 20, dadurch gekennzeichnet, dass eine Ausprägung einer Eigenschaft des Extrusionsprodukts offline bestimmt wird.
22. Verfahren nach einem der Aspekte 19 bis 21, dadurch gekennzeichnet, dass die Qualität des Extrusionsprodukts eine geometrische Eigenschaft aufweist.
23. Verfahren nach einem der Aspekte 19 bis 22, dadurch gekennzeichnet, dass die Qualität des Extrusionsprodukts eine optische Eigenschaft aufweist.
24. Verfahren nach einem der Aspekte 19 bis 23, dadurch gekennzeichnet, dass die Qualität des Extrusionsprodukts eine funktionale Eigenschaft aufweist.
25. Verfahren nach einem der Aspekte 19 bis 24, dadurch gekennzeichnet, dass die Qualität des Extrusionsprodukts inline angepasst wird und dass sie der gewünschten Qualität des Extrusionsprodukts entspricht, also keine messbare Störgröße aufweist.
26. Verfahren nach einem der Aspekte 19 bis 25, dadurch gekennzeichnet, dass die gewünschte Qualität des Extrusionsprodukts manuell vorgegeben wird.
27. Verfahren nach einem der Aspekte 19 bis 26, dadurch gekennzeichnet, dass die gewünschte Qualität des Extrusionsprodukts automatisch vorgegeben wird.
28. Verfahren nach einem der Aspekte 19 bis 27, dadurch gekennzeichnet, dass mehr als eine Messgröße als Parameter des Verfahrens mittels eines oder mehrerer Sensoren inline an dem hergestellten Extrusionsprodukt und/oder an der Produktionsvorrichtung bestimmt werden.
29. Verfahren nach einem der Aspekte 19 bis 28, dadurch gekennzeichnet, dass der Einstellgrößensollwert im Produktionsprozess des Extrusionsprodukts zur Beeinflussung der Qualität des Extrusionsprodukts über einen geeigneten spezifischen Algorithmus bestimmt wird.
30. Verfahren nach einem der Aspekte 19 bis 29, dadurch gekennzeichnet, dass der Einstellgrößensollwert im Produktionsprozess des Extrusionsprodukts zur Beeinflussung der Qualität des Extrusionsprodukts über einen geeigneten spezifischen Algorithmus bestimmt wird, wobei der Algorithmus eine inline-Regelabweichung, also die Differenz aus der gewünschten Qualität des Extrusionsprodukts und der ermittelten Qualität des Extrusionsprodukts, als Eingangsgröße verwendet.
31. Verfahren nach einem der Aspekte 19 bis 30, dadurch gekennzeichnet, dass der Einstellgrößensollwert im Produktionsprozess des Extrusionsprodukts zur Beeinflussung der Qualität des Extrusionsprodukts mit einem Optimierungsverfahren bestimmt wird.
32. Verfahren nach einem der Aspekte 19 bis 31, dadurch gekennzeichnet, dass der Einstellgrößensollwert im Produktionsprozess des Extrusionsprodukts zur Beeinflussung der Qualität des Extrusionsprodukts mit einem selbstlernenden Optimierungsverfahren bestimmt wird.
33. Verfahren nach einem der vorstehenden Aspekte, dadurch gekennzeichnet, dass der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes. und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenverarbeitungs- und -auswerteeinheit und/oder einer Datenbank gespeichert werden.
34. Verfahren nach einem der vorstehenden Aspekte, dadurch gekennzeichnet, dass der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei eine bereits bestehende Datenbank fortlaufend erweitert wird.
35. Verfahren nach einem der vorstehenden Aspekte, dadurch gekennzeichnet, dass der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Be- reich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank nur Daten einer spezifischen Produktionsvorrichtung zum Produzieren von einem Extrusionsprodukt beinhaltet.
36. Verfahren nach einem der vorstehenden Aspekte, dadurch gekennzeichnet, dass der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank Daten von einer Vielzahl von Produktionsvorrichtungen zum Produzieren von einem Extrusionsprodukt identischer Gattung beinhaltet.
37. Verfahren nach einem der vorstehenden Aspekte, dadurch gekennzeichnet, dass der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank Daten von einer Vielzahl von Produktionsvorrichtungen zum Produzieren von einem Extrusionsprodukt abweichender Gattung beinhaltet.
38. Verfahren nach einem der vorstehenden Aspekte, dadurch gekennzeichnet, dass der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank die Daten von Produktionsvorrichtungen zum Produzieren von einem Extrusionsprodukt eines Produzenten und/oder vieler Produzenten beinhaltet.
39. Verfahren nach einem der vorstehenden Aspekte, dadurch gekennzeichnet, dass der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank die Daten mit einem standortunabhängiger Speicher synchronisiert.
40. Verfahren zum Anfahren eines Produktionsprozesses eines Extrusionsprodukts mit einer Produktionsvorrichtung, dadurch gekennzeichnet, dass der Einstellgrößensollwert entsprechend einem Verlauf von vorbestimmten Einstellgrößensollwerten in Abhängigkeit eines Produktionsprozessverlaufsparameters vorgegeben wird.
41. Verfahren nach Aspekt 40, dadurch gekennzeichnet, dass ein Einstellgrößensollwert mit einem Verfahren nach einem der Aspekte 19 bis 39 vorbestimmt wird.
42. Verfahren zum Herstellen eines Extrusionsprodukts, wobei ein Extruder zum Plastifizieren eines thermoplastischen Kunststoffs betrieben wird, wobei während des Herstellens ein Verfahren nach einem der vorstehenden Aspekte durchgeführt wird.
43. Anlage zum Herstellen eines Extrusionsprodukts, wobei die Anlage einen Extruder zum Plastifizieren eines thermoplastischen Kunststoffs und eine Düse zum Austreten des Kunststoffs aufweist, dadurch gekennzeichnet, dass die Anlage eine Datenverarbeitungs- und -auswerteeinheit aufweist, wobei die Datenverarbeitungs- und -auswerteeinheit eine Programmierung aufweist, wobei die Programmierung zum Ausführen eines Verfahrens nach einem der vorstehenden Aspekte eingerichtet ist.
44. Anlage nach Aspekt 43, dadurch gekennzeichnet, dass die Anlage ein Einstellgrößenmesssystem zum Bestimmen einer Einstellgröße des Produktionsprozesses aufweist.
45. Anlage nach einem der Aspekte 43 oder 44 dadurch gekennzeichnet, dass die Anlage ein Messgrößenmesssystem zum Bestimmen einer Messgröße des Produktionsprozesses, insbesondere einer Prozessgröße, aufweist.
46. Anlage nach einem der Aspekte 43 bis 45, dadurch gekennzeichnet, dass die Anlage ein Eigenschaftsmesssystem zum inline-Bestimmen einer Ausprägung einer Eigenschaft des Extrusionsprodukts aufweist.
47. Anlage nach einem der Aspekte 43 bis 46, dadurch gekennzeichnet, dass die Anlage ein Stellglied zum inline-Beeinflussen der Qualität des Extrusionsprodukts mit segmentierten Stellzonen aufweist.

### Liste der verwendeten Bezugszeichen

- 1: Anlage
- 2: Produktionsvorrichtung
- 3: Datenerfassungs- und -auswerteeinheit
- 4: Datenbank
- 5: Einstellgrößenmesssystem
- 6: Prozessgrößenmesssystem
- 7: Eigenschaftsmesssystem
- 8: Extrusionsprodukt
- 9: Datenverbindung
- 10: Datenverbindung
- 11: Datenverbindung
- 12: Datenverbindung
- 20: Einstellgröße
- 21: Einstellgröße
- 22: Einstellgröße
- 23: Einstellgrößensensor und Einstellgrößengeber
- 24: Datenverbindung
- 25: Einstellgrößensensor und Einstellgrößengeber
- 26: Datenverbindung
- 27: Einstellgrößensensor und Einstellgrößengeber
- 28: Datenverbindung
- 30: Prozessgröße
- 31: Prozessgröße
- 32: Prozessgröße
- 33: Prozessgrößensensor
- 34: Datenverbindung
- 35: Prozessgrößensensor
- 36: Datenverbindung
- 37: Prozessgrößensensor
- 38: Datenverbindung
- 40: Prozessgröße Lufttemperatur
- 41: Prozessgröße Luftfeuchtigkeit
- 42: Prozessgröße Luftdruck
- 43: Prozessgrößensensor
- 44: Datenverbindung
- 45: Prozessgrößensensor
- 46: Datenverbindung
- 47: Prozessgrößensensor
- 48: Datenverbindung
- 50: Eigenschaft
- 51: Eigenschaft
- 52: Eigenschaft
- 53: Eigenschaftssensor
- 54: Datenverbindung
- 55: Eigenschaftssensor
- 56: Datenverbindung
- 57: Eigenschaftssensor
- 58: Datenverbindung
- 60: Datenverbindung
- 61: Datenverbindung
- 62: Datenverbindung

## Patentansprüche

1. Verfahren zum indirekten Ableiten einer systematischen Abhängigkeit bei einem Produktionsprozess eines Extrusionsprodukts zwischen einer Messgröße, insbesondere Prozessgröße, sowie einer Einstellgröße des Extrusionsprozesses und einer Eigenschaft des Extrusionsprodukts, ***dadurch gekennzeichnet, dass***
eine Eigenschaft des Extrusionsprodukts als ein erster Parameter des Verfahrens mittels eines Sensors inline an dem hergestellten Extrusionsprodukt bestimmt wird, und/oder eine Ausprägung einer Eigenschaft des Extrusionsprodukts als ein erster Parameter des Verfahrens bestimmt wird,
eine Messgröße, insbesondere die Prozessgröße des Produktionsprozesses, als ein zweiter Parameter des Verfahrens mittels eines Sensors bestimmt wird,
ein dritter Parameter des Verfahrens, insbesondere ein Parameter der Produktionsvorrichtung aus der Produktion des Extrusionsprodukts, insbesondere die Einstellgröße des Produktionsprozesses, bestimmt wird,
ein Datenerfassungssystem die ermittelten Parameter bei Bedarf digitalisiert und aufzeichnet,
die bestimmten Parameter auf einander Bezug nehmend in einer Datenbank geordnet gespeichert werden,
und aus den in der Datenbank gespeicherten Daten systematisch die spezifische Abhängigkeit zwischen den Parametern abgeleitet wird, und zwar mittels einer elektronischen Datenverarbeitungs- und -auswerteeinheit, welche mittels eines Algorithmus auf die Parameter zugreift und daraus die systematische Abhängigkeit ermittelt,
wobei das Ableiten mindestens zwei, insbesondere mindestens 100 Datensätze von Parametern umfasst.

2. Verfahren nach Anspruch *1, **dadurch gekennzeichnet, dass*** eine Ausprägung einer Eigenschaft des Extrusionsprodukts inline oder offline bestimmt wird.

3. Verfahren nach einem der Ansprüche 1 oder 2, ***dadurch gekennzeichnet, dass*** die systematische Abhängigkeit der Parameter in Form einer ein Bestimmtheitsmaß aufweisenden Kurve bestimmt wird.

4. Verfahren nach einem der Ansprüche 1 bis 3, ***dadurch gekennzeichnet, dass*** die systematische Abhängigkeit der Parameter durch einen Einstellbereich bestimmt wird, der in Abhängigkeit des Normalbereiches und/oder des Warnbereiches und/oder des Alarmbereiches für die Eigenschaft des Extrusionsprodukts steht.

5. Verfahren nach einem der Ansprüche 1 bis 4, ***dadurch gekennzeichnet, dass*** die systematische Abhängigkeit in Form einer Hüllkurve, die auch als Einhüllende oder Envelope bezeichnet werden kann, bestimmt wird, welche in Abhängigkeit des Normalbereiches und/oder des Warnbereiches und/oder des Alarmbereiches für die Eigenschaft des Extrusionsprodukts steht.

6. Verfahren nach einem der Ansprüche 1 bis *5, **dadurch gekennzeichnet, dass*** die systematische Abhängigkeit zwischen den Parametern
a. heuristisch; oder
b. mathematisch; oder
c. mit einem Optimierungsverfahren, bevorzugt einem selbstlernenden Optimierungsverfahren;
bestimmt wird.

7. Verfahren zum Anpassen der Qualität eines mit einer Produktionsvorrichtung hergestellten Extrusionsprodukts, wobei die Qualität inline bestimmt und angepasst wird,
***dadurch gekennzeichnet, dass***
eine Ausprägung einer Eigenschaft des Extrusionsprodukts bestimmt wird, und/oder eine Eigenschaft des Extrusionsprodukts mittels eines Sensors inline an dem hergestellten Extrusionsprodukt bestimmt wird,
eine Messgröße, insbesondere Prozessgröße, des Produktionsprozesses mittels eines Sensors bestimmt wird,
und ein Einstellgrößensollwert anhand der bestimmten Eigenschaft und der Messgröße, insbesondere der Prozessgröße, inline angepasst wird,
wobei das Anpassen der Einstellgröße durch Verstellen eines Stellglieds erfolgt, wobei der Einstellgrößensollwert zur bestimmten Ausprägung der Eigenschaft und zur Messgröße, insbesondere Prozessgröße, durch eine systematische Abhängigkeit beschrieben wird, die mit einem Verfahren nach einem der Ansprüche 1 bis 10 bestimmt ist,
und durch das Anpassen der Einstellgröße die Qualität des Extrusionsprodukts derart verändert wird, dass eine gewünschte Eigenschaft in ihrer Ausprägung verstärkt und/oder eine ungewünschte Eigenschaft in ihrer Ausprägung reduziert wird.

8. Verfahren nach Anspruch 7, ***dadurch gekennzeichnet, dass*** eine Ausprägung einer Eigenschaft des Extrusionsprodukts inline oder offline bestimmt wird.

9. Verfahren nach einem der Ansprüche 7 bis 8, ***dadurch gekennzeichnet, dass*** die Qualität des Extrusionsprodukts
a. eine geometrische Eigenschaft; oder
b. eine optische Eigenschaft; oder
c. eine funktionale Eigenschaft;
aufweist.

10. Verfahren nach einem der Ansprüche 7 bis 9, ***dadurch gekennzeichnet, dass*** die Qualität des Extrusionsprodukts inline angepasst wird und dass sie der gewünschten Qualität des Extrusionsprodukts entspricht, also keine messbare Störgröße aufweist.

11. Verfahren nach einem der Ansprüche 7 bis 10, ***dadurch gekennzeichnet, dass*** die gewünschte Qualität des Extrusionsprodukts manuell oder automatisch vorgegeben wird.

12. Verfahren nach einem der Ansprüche 7 bis 11, ***dadurch gekennzeichnet, dass*** mehr als eine Messgröße als Parameter des Verfahrens mittels eines oder mehrerer Sensoren inline an dem hergestellten Extrusionsprodukt und/oder an der Produktionsvorrichtung bestimmt werden.

13. Verfahren nach einem der Ansprüche 7 bis 12, ***dadurch gekennzeichnet, dass*** der Einstellgrößensollwert im Produktionsprozess des Extrusionsprodukts zur Beeinflussung der Qualität des Extrusionsprodukts
a. über einen geeigneten spezifischen Algorithmus, wobei der Algorithmus bevorzugt eine inline-Regelabweichung, also die Differenz aus der gewünschten Qualität des Extrusionsprodukts und der ermittelten Qualität des Extrusionsprodukts, als Eingangsgröße verwendet; oder
b. mit einem selbstlernenden Optimierungsverfahren;
bestimmt wird.

14. Verfahren nach einem der vorstehenden Ansprüche, ***dadurch gekennzeichnet, dass*** der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenverarbeitungs- und -auswerteeinheit und/oder einer Datenbank gespeichert werden.

15. Verfahren nach einem der vorstehenden Ansprüche, ***dadurch gekennzeichnet, dass*** der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei eine bereits bestehende Datenbank fortlaufend erweitert wird.

16. Verfahren nach einem der vorstehenden Ansprüche, ***dadurch gekennzeichnet, dass*** der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank
a. nur Daten einer spezifischen Produktionsvorrichtung zum Produzieren von einem Extrusionsprodukt; oder
b. Daten von einer Vielzahl von Produktionsvorrichtungen zum Produzieren von einem Extrusionsprodukt identischer Gattung; oder
c. Daten von einer Vielzahl von Produktionsvorrichtungen zum Produzieren von einem Extrusionsprodukt abweichender Gattung;
beinhaltet.

17. Verfahren nach einem der vorstehenden Ansprüche, ***dadurch gekennzeichnet, dass*** der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank die Daten von Produktionsvorrichtungen zum Produzieren von einem Extrusionsprodukt eines Produzenten und/oder vieler Produzenten beinhaltet.

18. Verfahren nach einem der vorstehenden Ansprüche, ***dadurch gekennzeichnet, dass*** der Einstellgrößenistwert und/oder der Messwert und/oder ein Eigenschaftswert und/oder ein Einstellgrößensollwert und/oder ein Messgrößensollwert und/oder ein Eigenschaftssollwert und/oder ein Normalbereich, insbesondere der Bereich eines Einstellgrößensollwertes und/oder der Bereich eines Messgrößensollwertes und/oder eines Eigenschaftssollwertes, und/oder ein Warnbereich, insbesondere der Bereich eines Einstellgrößensollwertes und/oder der Bereich eines Messgrößensollwertes und/oder eines Eigenschaftssollwertes, und/oder ein Alarmbereich, insbesondere der Bereich eines Einstellgrößensollwertes und/oder der Bereich eines Messgrößensollwertes und/oder eines Eigenschaftssollwertes, in einer Datenbank gespeichert werden, wobei die Datenbank die Daten mit einem standortunabhängiger Speicher synchronisiert.

19. Verfahren zum Anfahren eines Produktionsprozesses eines Extrusionsprodukts mit einer Produktionsvorrichtung,
***dadurch gekennzeichnet, dass***
der Einstellgrößensollwert entsprechend einem Verlauf von vorbestimmten Einstellgrößensollwerten in Abhängigkeit eines Produktionsprozessverlaufsparameters vorgegeben wird.

20. Verfahren nach Anspruch 18, ***dadurch gekennzeichnet, dass*** ein Einstellgrößensollwert mit einem Verfahren nach einem der Ansprüche 7 bis 18 vorbestimmt wird.
